(19) Europäisches Patentamt
European Patent Office
Office européen des brevets

(11) **EP 3 026 324 A2**

(12) **EUROPEAN PATENT APPLICATION**

(43) Date of publication:
**01.06.2016 Bulletin 2016/22**

(51) Int Cl.:
*F21K 99/00* (2016.01)     *F21V 29/83* (2015.01)
*F21V 7/04* (2006.01)     *F21V 29/70* (2015.01)
*F21V 29/508* (2015.01)     *F21Y 115/10* (2016.01)

(21) Application number: **15195180.3**

(22) Date of filing: **18.11.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **28.11.2014 JP 2014241115**

(71) Applicant: **Kabushiki Kaisha Toshiba
Tokyo 105-8001 (JP)**

(72) Inventors:
• **Kato, Mitsuaki
Tokyo, 105-8001 (JP)**
• **Hayashihara, Hiromichi
Tokyo, 105-8001 (JP)**
• **Ohno, Hiroshi
Tokyo, 105-8001 (JP)**
• **Takamatsu, Tomonao
Tokyo, 105-8001 (JP)**

(74) Representative: **Hoffmann Eitle
Patent- und Rechtsanwälte PartmbB
Arabellastraße 30
81925 München (DE)**

(54) **LIGHTING DEVICE**

(57)     A lighting device (100, 100A) according to one embodiment includes a light guide member (11), at least one light source (40) and a substrate (41) on which the light source (40) is mounted. The light guide member (11) includes a first surface (11a) facing an outside of the lighting device (100, 100A), a second surface (11b) opposite to the first surface (11a), and a side surface (11c) extending from an end of the first surface (11a) to an end of the second surface (11b). The light guide member (11) also includes a diffusion portion (12). The light source (40) faces a side surface (11c) of the light guide member (11). The casing (10) includes a thermal dissipation portion (51, 52) formed of a metal and extending along the second surface (11b) of the light guide member (11). The casing (10) supports the substrate (41) and is thermally connected to the light source (40).

F I G. 3

EP 3 026 324 A2

**Description**

FIELD

Embodiments described herein relate generally to a lighting device.

BACKGROUND

In general, in a lighting device using a light-emitting diode (LED), an LED is placed on a base, and a diffusion cover is provided to cover the LED, whereby light emitted from the LED is diffused and emitted to the outside.

In such lighting devices, there is a demand for realizing a light distribution angle (namely, a gauge indicating the degree of distribution of light emitted from the LED), a total luminous flux (namely, a gauge indicating the degree of brightness of light emitted from the LED), and a size, which are substantially the same as those of a lighting device using a general filament or fluorescent light (for example, a downlight). There is another demand for a lighting device having additional functions, such as communication and storage, as well as a power supply circuit.

In the lighting devices using LEDs, in order to control the light distribution angle, it is necessary to design the shape of a cover so that the light forwardly emitted from the light emitting surface of the cover is guided in a desired direction.

To increase the total luminous flux, it is necessary to use an LED of higher output. In this case, however, the amount of heat emitted from the LED is increased. The heat emitted from the LED may adversely affect the LED element itself, and a circuit board, such as the power supply circuit, thereby degrading the performance of the LED element and the circuit board.

In order to appropriately mount additional components including the power supply circuit, it is desirable to reduce the ratio of a space through which LED light is transmitted in a lighting device to a space in which the additional components are mountable. It is also desirable to insulate additional components of low thermal resistance from the LED, and to dissipate the heat of the additional components themselves.

The embodiments provide a lighting device of enhanced thermal dissipation.

BRIEF DESCRIPTION OF THE DRAWINGS

FIG. 1 is a perspective view showing an example of a state of use of a lighting device according to a first embodiment.
FIG. 2 is a bottom view showing the lighting device shown in FIG. 1.
FIG. 3 is a cross-sectional view taken along line F3-F3 of FIG. 2.
FIG. 4 is a cross-sectional view taken along line F4-F4 of FIG. 3.
FIG. 5 is a cross-sectional view taken along line F5-F5 of FIG. 3.
FIG. 6 is a cross-sectional view showing an example of an air flow around the lighting device shown in FIG. 3.
FIG. 7 is a cross-sectional view showing an example of a lighting device according to a second embodiment.
FIG. 8 is a cross-sectional view showing an example of a lighting device according to a third embodiment.
FIG. 9 is a cross-sectional view taken along line F9-F9 of FIG. 8.
FIG. 10 is a cross-sectional view taken along line F10-F10 of FIG. 8.
FIG. 11 is a cross-sectional view showing an example of a lighting device according to a fourth embodiment.
FIG. 12 is a cross-sectional view taken along line F12-F12 of FIG. 11.
FIG. 13 is a cross-sectional view showing, as examples, the inclination angle of the inner peripheral surface of an opening and the inclination angle of an inclined portion in the lighting device of FIG. 11.
FIG. 14 is a graph, showing a relationship example between the inclination angle and light distribution angle of the inner peripheral surface of the opening in the lighting device of FIG. 11.
FIG. 15 is a graph, showing the relationship between the inclination angle and efficiency of the inclined portion in the lighting device of FIG. 11.
FIG. 16 is a cross-sectional view showing an example of a modification of the lighting device shown in FIG. 11.
FIG. 17 is a bottom view showing an example of a lighting device according to a fifth embodiment.
FIG. 18 is a cross-sectional view taken along line F18-F18 of FIG. 17.
FIG. 19 is a cross-sectional view taken along line F19-F19 of FIG. 18.
FIG. 20 is a cross-sectional view taken along line F20-F20 of FIG. 18.
FIG. 21 is a cross-sectional view showing an example of an air flow around the lighting device shown in FIG. 18.
FIG. 22 is a cross-sectional view showing an example of a lighting device according to a sixth embodiment.
FIG. 23 is a cross-sectional view taken along line F23-F23 of FIG. 22.

FIG. 24 is a cross-sectional view showing an example of a lighting device according to a seventh embodiment.

FIG. 25 is a view showing, as an example, the light distribution angle and efficiency of the lighting device shown in FIG. 24.

FIG. 26 is a cross-sectional view showing an example of a modification of the lighting device shown in FIG. 24.

FIG. 27 is a view showing, as an example, the light distribution angle and efficiency of the lighting device shown in FIG. 26.

FIG. 28 is a cross-sectional view showing an example of a lighting device according to an eighth embodiment.

FIG. 29 is a cross-sectional view showing an example of a lighting device according to a ninth embodiment.

FIG. 30 is a bottom view showing an example of a lighting device according to a tenth embodiment.

FIG. 31 is a cross-sectional view taken along line F31-F31 of FIG. 30.

FIG. 32 is a graph showing the relationship between d/$\lambda$ and the reflectance, where d is the thickness of a layer, and $\lambda$ is the wavelength of light.

DETAILED DESCRIPTION

Various embodiments will be described hereinafter with reference to the accompanying drawings. In general, according to one embodiment, a lighting device includes a light guide member, at least one light source and a substrate on which the light source is mounted. The light guide member includes a first surface facing an outside of the lighting device, a second surface opposite to the first surface, and a side surface extending from an end of the first surface to an end of the second surface. The light guide member also includes a diffusion portion. The light source faces a side surface of the light guide member. The casing includes a thermal dissipation portion formed of a metal and extending along the second surface of the light guide member. The casing supports the substrate and is thermally connected to the light source.

With reference to the accompanying drawings, embodiments will be described.

In this description, a plurality of expressions are used for each of some elements. These expressions are merely examples, and other expressions may be used for the elements. Similarly, even an element that is referred to only by one expression may be referred to by another expression.

Moreover, an x-axis, a y-axis and a z-axis are defined. The y-axis corresponds to the thickness of a lighting device, along which axis a center axis C parallel to the light-emitting (radiation) direction of the lighting device extends. Each of the x-axis and the z-axis is substantially perpendicular to the y-axis. That is, the x-axis and the z-axis are substantially perpendicular to the center axis C. Further, the x-axis and the z-axis are perpendicular to each other.

(First embodiment)

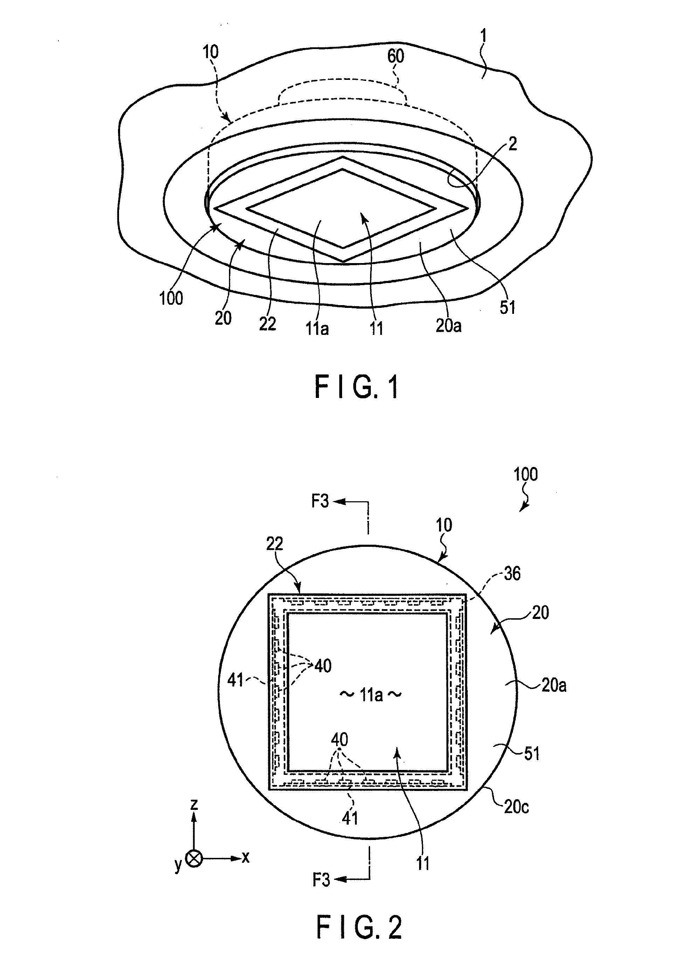

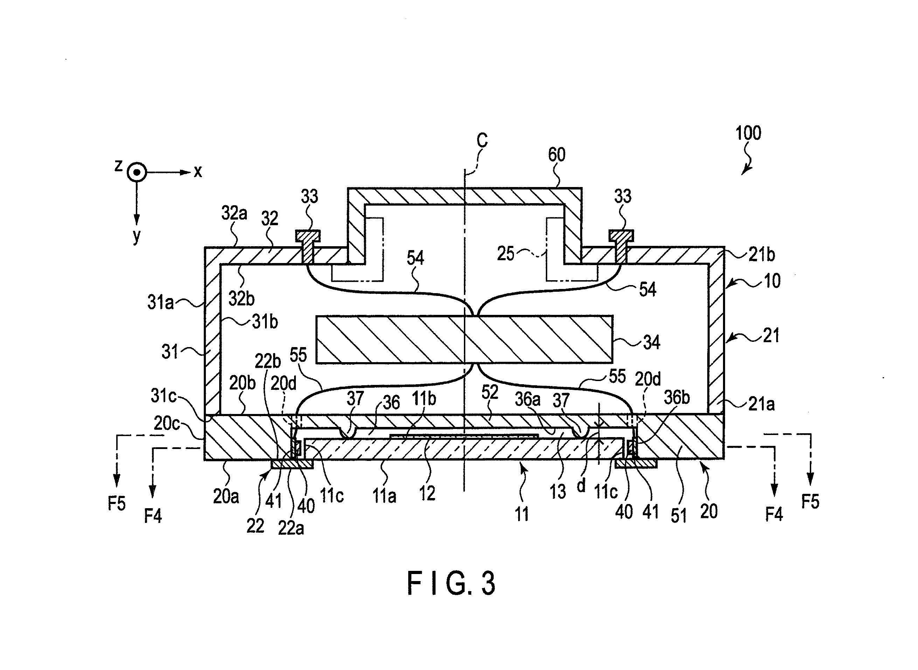

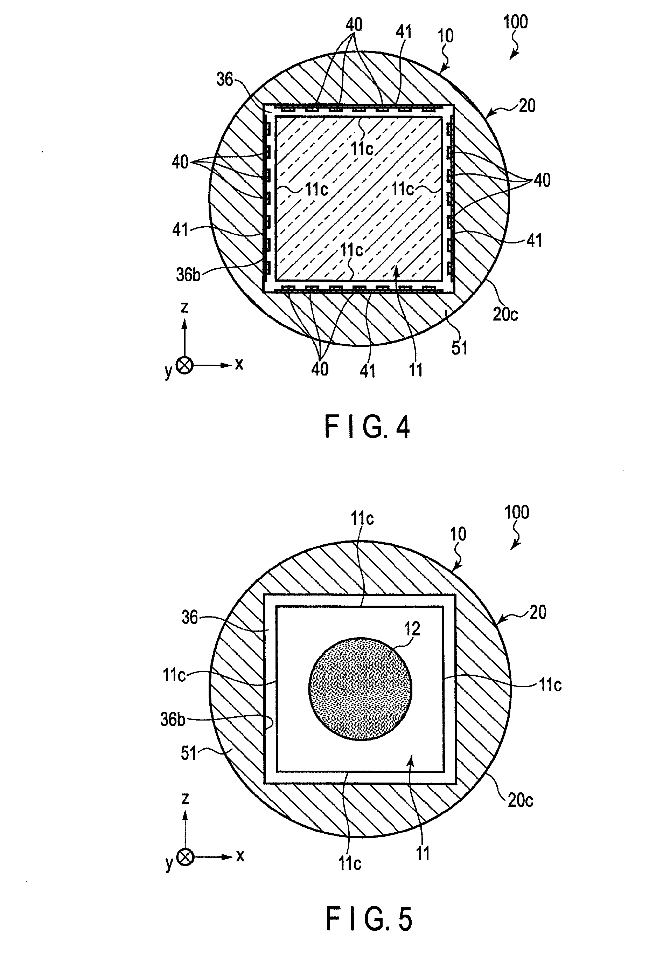

FIGS. 1 to 6 show a lighting device 100 according to a first embodiment. FIG. 1 shows the lighting device 100 attached to the ceiling of a room, for example. FIG. 2 shows the appearance of the lighting device 100. FIG. 3 is a cross-sectional view taken along line F3-F3 of FIG. 2. FIGS. 4 and 5 are cross-sectional views taken along lines F4-F4 and F5-F5, respectively.

The lighting device 100 according to the first embodiment is an LED lamp used, fitted in a socket provided in, for example the ceiling of a room. More specifically, the lighting device 100 of the first embodiment is an LED lamp (downlight LED lighting unit, flat LED lighting unit) whose light distribution and lighting mode are made to be similar to those of a conventional downlight. As shown in FIG. 1, the lighting device 100 is used in a state where, for example, its half or more portion (along the thickness) is inserted in an opening 2 formed in a ceiling 1. The structure of the lighting device 100 is not limited to the above, but may be widely used as various lighting devices (luminescent devices) mounted on a ceiling or a high ceiling.

As shown in FIGS. 2 to 5, the lighting device 100 of the first embodiment comprises a casing 10, a light guide member 11, a diffusion portion 12 (diffusion means), a reflective layer 13, light sources 40, substrates 41 and a mounting portion 60 (a cap, an attachment). As shown in FIG. 3, the casing 10 is formed flat, and has a thickness smaller than its width. The casing 10 includes a casing body 21 (cylindrical portion) and a base 20 (support portion, lid portion). In the first embodiment, the casing 10 is a combination of by the casing body 21 and the base 20.

More specifically, the casing body 21 is formed, for example, cylindrical, namely, is a hollow member. However, the casing body 21 is not limited to the cylindrical shape, but may be of a box shape that has a polygonal cross section. The casing body 21 includes a first end 21a (lower end), and a second end 21b (upper end) opposing the first end.

The casing body 21 has a peripheral wall 31 and a ceiling 32 (flat wall). The peripheral wall 31 extends between the first and second ends 21a and 21b of the casing body 21 along the thickness of the lighting device 100. The peripheral wall 31 has an outer surface 31a, an inner surface 31b, and an end face 31c at the first end 21a. The end face 31c is substantially perpendicular to the center axis C.

The ceiling 32 is level with the second end 21b of the casing body 21 and extends substantially perpendicular with respect to the center axis C. That is, the ceiling 32 substantially horizontally extends from the upper end of the peripheral wall 31. The ceiling 32 closes the internal space of the cylindrical casing 10 at the second end 21b of the casing body 21. The ceiling 32 has an outer surface 32a and an inner surface 32b. The ceiling 32 is provided with a mounting portion 60 and a plurality of electrical contacts 33, which will be described later. The electrical contacts 33 are electrically united with corresponding contacts (not shown) in a socket in the ceiling 1, in which the lighting device 100 is fitted, thereby supplying electricity to the lighting device 100. The casing body 21 supports the base 20, and is thermally connected to the base 20 and the light sources 40. More specifically, the end face 31c of the casing body 21 is kept in contact with the base 20 to support the base 20. As the material of the casing body 21, a material excellent in thermal conductivity (for example, a metal material, such as an aluminum alloy or a copper alloy), or a synthetic resin, such as acrylic resin, epoxy resin, polybutylene terephthalate (PBT), polycarbonate, or polyetheretherketone (PEEK), is used. The casing body 21 absorbs part of the heat generated by the light sources 40, and transmits part of the absorbed heat to the mounting portion 60. Outer surfaces 31a and 32a of the casing body 21 may be formed like fins having uneven surfaces. In this case, outer surfaces 31a and 32a have greater thermal dissipation areas, and hence the thermal resistance between them and a peripheral atmosphere thereof decreases.

The casing body 21 is filled with, for example, air. However, the casing body may be filled with a gas other than air, such as helium, or with a pressurized gas. Alternatively, he casing body 21 may be filled with water, silicone grease, a fluorocarbon, etc., which are liquids. Further, the casing body 21 may be filled with a plastic as a synthetic resin (high-polymer compound), such as acrylic resin, epoxy resin, polybutylene terephthalate (PBT), polycarbonate or polyetheretherketone (PEEK), or with an elastomer, such as silicone rubber or urethane rubber. Alternatively, the casing body may be filled with a metal, such as aluminum or copper, or with glass.

If one of those materials is used for filling, a higher thermal conductivity than in the case where air is used can be obtained, thereby accelerating thermal conduction. Further, if a highly electrically insulative material is used as a material to fill the casing body 21, a power supply circuit 34 (described later) housed in the casing body 21 can be electrically insulated more reliably. Furthermore, a heat pipe may be inserted in the casing body 21, thereby further promoting thermal conduction.

Outer surfaces 31a and 32a of the casing body 21 may be coated with a radiation layer of high thermal radiation, such as an alumite layer formed by a surface treatment, or a painted layer. If a material having low absorbance of visible light, such as white paint, is used for the radiation layer, light loss at outer surfaces 31a and 32a of the casing body 21 can be reduced. Outer surfaces 31a and 32a of the casing body 21 may be formed to be glossy surfaces by polishing, painting, metal deposition, etc. In this case, although radiation is suppressed, light loss at the surface of the casing body 21 can be reduced.

Moreover, in order to promote dissipation of heat from the casing body 21 to the mounting portion 60, a fixing member 25 (cap connector) may be provided on the inner surface of the mounting portion 60. The fixed member 25 is secured to the inner surface of the mounting portion 60 and the inner surface 32b of the casing body 21. The fixing member 25 is, for example, a member that can be engaged with the mounting portion 60, and is used to transmit, to the mounting portion 60, heat generated by the light sources 40.

The base 20 will now be described.

The base 20 is attached to the first end 21a of the casing body 21, and closes the internal space of the casing 10 at the first end 21a. The base 20 is formed into, for example, a plate having a predetermined thickness, and extends over, for example, substantially the entire width of the casing body 21. The base 20 has a first surface 20a (lower surface), a second surface 20b (upper surface) opposing the first surface, and a side surface 20c (peripheral surface) connecting the first and second surfaces 20a and 20b. The first surface 20a is exposed to the outside (ambient environment) of the lighting device 100. The second surface 20b is opposed to the internal space of the casing 10. The side surface 20c is substantially coaxial with outer surface 31a of the peripheral wall 31 of the casing body 21.

As shown in FIG. 3, the base 20 includes a receiving portion 36 formed therein and receiving the light guide member 11, the light sources 40, and the substrates 41. The receiving portion 36 is formed in the first surface 20a of the base 20, and is depressed from the first surface 20a. That is, the receiving portion 36 is a recess opening downward. The receiving portion 36 has a ceiling surface 36a (horizontal surface) and an inner peripheral surface 36b (vertical surface). The ceiling surface 36a extends substantially parallel to the second surface 20b of the base 20. The inner peripheral surface 36b extends from the peripheral edge of the ceiling surface 36a along the thickness of the lighting device 100, thereby connecting the ceiling surface 36a and the first surface 20a.

As shown in FIGS. 3 and 4, the light guide member 11, the light sources 40 and the substrates 41 are contained in the receiving portion 36 of the base 20. As shown in FIG. 4, the light guide member 11 is a lightguide plate formed in, for example, a polygonal shape. The light guide member 11 is formed of acrylic, polycarbonate, cycloolefin polymer, glass, etc., which have high light transmittance. The light guide member 11 is an example of a light-transmitting member.

The light guide member 11 of the first embodiment is, for example, a rectangular lightguide plate. The receiving portion 36 is formed to be polygonal (for example, rectangular) in accordance with the outer shape of the light guide member 11, and is formed larger by one size than the light guide member 11.

As shown in FIG. 3, the light guide member 11 has a first surface 11a (obverse surface, outer surface), a second surface 11b (reverse surface, back surface, inner surface), and side surfaces 11c (peripheral surface), and passes therethrough light emitted from the light sources 40. The first surface 11a faces the outside of the lighting device 100, and at least part thereof is exposed to the outside of the lighting device 100. The first surface 11a is substantially level with the first surface 20a of the base 20. The second surface 11b is opposite to the first surface 11a, and extends substantially parallel to the first surface 11a. The second surface 11b faces the ceiling surface 36a of the receiving portion 36. The side surfaces 11c connect the first and second surfaces 11a and 11b. The side surfaces 11c face the inner peripheral surface 36b of the receiving portion 36. The ends (side surfaces 11c) of the light guide member 11 have a thickness not less than the length of the light-emitting surfaces of the light sources 40 measured along the center axis C.

Each light source 40 includes one or more light-emitting elements, such as LEDs, and generates visible light, such as white light. When, for example, light-emitting elements that generate blue-purple light with a wavelength of 450 nm are employed, each light source 40 generates white light if the light-emitting elements are covered with, for example, a resin that contains a fluorescent material for absorbing blue-purple light and generating yellow light with a wavelength of about 560 nm.

The light sources 40 are received between the light guide member 11 and the inner peripheral surface 36b of the receiving portion 36, and face the side surfaces 11c of the light guide member 11. The light sources 40 face the side surfaces 11c of the light guide member 11 on a plane parallel to the first surface 11a thereof. The light sources 40 emit light toward the central axis C, thereby causing light to enter the light guide member 11 through the side surfaces 11c thereof. A plurality of light sources 40 are arranged at equal intervals along the one or more side surfaces 11c of the polygonal light guide member 11. In the first embodiment, a plurality of light sources 40 are arranged in each of the four side surfaces 11c of the rectangular light guide member 11.

The lighting device 100 has a plurality of substrates 41 corresponding to a plurality of sides of the polygonal light guide member 11. Each substrate 41 is provided with a plurality of light sources 40, and is thermally connected to the light sources 40. The substrates 41 with the light sources 40 are arranged along the respective sides of the light guide member 11, and are received between the side surfaces 11c of the light guide member 11, and the inner peripheral surface 36b of the receiving portion 36. The substrates 41 are fixed to at least either the inner peripheral surface 36b or the ceiling surface 36a of the receiving portion 36. As a result, the substrates 41 are supported by and thermally connected to the base 20.

The base 20 absorbs heat generated by the light sources 40, and transmits part of the heat to the light guide member 11 and the casing body 21. The base 20 is formed of, for example, a material excellent in thermal conductivity (for example, a metal material, such as an aluminum alloy or a copper alloy), or a synthetic resin, such as acrylic resin, epoxy resin, polybutylene terephthalate (PBT), polycarbonate, or polyetheretherketone (PEEK).

The base 20 may be substantially discoid as shown in, for example, FIG. 4, or may be polygonal. A screw hole, a screw box, or a hole is formed in part of the base 20 for connecting the base to the substrates 41 and the casing body 21. One or more convex portions 37 for maintaining a distance between the light guide member 11 and the base 20 may be provided on the ceiling surface 36a of the receiving portion 36.

The surfaces 20a, 20b, 20c, 36a and 36b of the base 20 may be coated with a radiation layer of high thermal radiation, such as an alumite layer formed by a surface treatment, or a painted layer. If a material having low absorbance of visible light, such as white paint, is used for the radiation layer, light loss at the surfaces 20a, 20b, 20c, 36a and 36b of the base 20, etc., can be reduced. The surfaces 20a, 20b, 20c, 36a and 36b of the base 20 may be formed to be glossy surfaces by polishing, painting, metal deposition, etc. Also in this case, light loss can be reduced at the surfaces 20a, 20b, 20c, 36a and 36b of the base 20, etc.

If the substrates 41 are formed of a material of high electrical conductivity, such as a metal, it is preferable that the surfaces of the substrates opposite to those provided with the light sources 40 should be brought into contact with the base 20, with electrically-insulated sheets having a high thermal conductivity interposed between the base 20 and the substrates 41. This is because in order to transmit, to the base 20, heat generated by the light sources 40, the smaller the thermal contact resistance between the light sources 40 and the base 20, the more preferable. Further, for this purpose, it is also preferable that the light sources 40 should be electrically isolated from the base 20. In the case of a material of low electrical conductivity, such as a ceramic, the above-mentioned insulating sheets are not necessarily required.

The base 20 of the first embodiment will be described from another point of view. The base 20 has a first portion 51 and a second portion 52. The first portion 51 is located in an area separate from the receiving portion 36, and forms part of the outer surface of the casing 10 (for example, the first surface 20a and the side surface 20c of the base 20). Thus, the first portion 51 functions as a first thermal dissipation portion exposed to the outside (ambient environment) of the lighting device 100. The first portion 51 faces the light guide member 11 on a plane substantially perpendicular to the center axis C. Part (lower end) of the first portion 51 is located, for example, below the light sources 40. The first portion 51 supports the substrate 41 and receives heat from the light sources 40.

The second portion 52 provides the ceiling 36a of the receiving portion 36. The second portion 52 extends parallel to the second surface 11b of the light guide member 11. The second portion 52 is formed larger by one size than the light guide member 11, and covers the entire light guide member 11. The gap (which will serve as a reflective layer (air layer) 13 described later) between the second portion 52 and the light guide member 11 is smaller than, for example, the thickness of the light guide member 11. If the distance between the second portion 52 and the light guide member 11 is smaller than a predetermined value, the mobility of gas (for example, air) in this gap will decrease, and the gas in the gap will function as a thermal conduction layer that efficiently transmits the heat of the second portion 52 to the light guide member 11.

The second portion 52 is formed integral with the first portion 51 as one body, and is thermally connected to the first portion 51. In the first embodiment, the whole base 20 is formed of a metal material. Thus, the first portion 51 and the second portion 52 are metal portions. Part of the heat received by the first portion 51 from the light sources 40 is transmitted from the first portion 51 to the second portion 52, and diffuses in the second portion 52. The second portion 52 dissipates at least part of the heat, transmitted thereto, to the outside of the lighting device 100 through the light guide member 11. The second portion 52 functions as the second thermal dissipation portion of the base 20.

Next, the diffusion portion 12 and the reflective layer 13 will be described.

The diffusion portion 12 is provided, for example, on the second surface 11b of the light guide member 11. The diffusion portion 12 is formed by performing, for example, silk printing, sandblasting, cutting, or white painting, on the light guide member 11. In the first embodiment, the diffusion portion 12 is formed to be circular on the center of the polygonal light guide member 11, as is shown in FIG. 5. The diffusion portion 12 enables a portion of the light guide member 11 having a high radiation intensity to be made circular like a general downlight using a chip-on-board (COB) technique, which brings little discomfort even when the light guide member 11 is polygonal.

If glare reduction as important, the diffusion portion 12 may be provided on the entire second surface 11b of the light guide member 11. Further, if the color of the diffusion portion 12 is set thick at the center portion thereof, and is set gradually thinner toward the peripheral portion thereof, the light distribution can be made further uniform.

The reflective layer 13 is formed of, for example, a space defined between the light guide member 11 and the ceiling 36a of the receiving portion 36, and is formed of, for example, air. The thickness d of the reflective layer 13 is set greater than the wavelength $\lambda$ of light emitted by, for example, the light source 40. That is, the thickness d of the reflective layer 13 is set to satisfy the following in equation (1): $\lambda \le d$ (1)

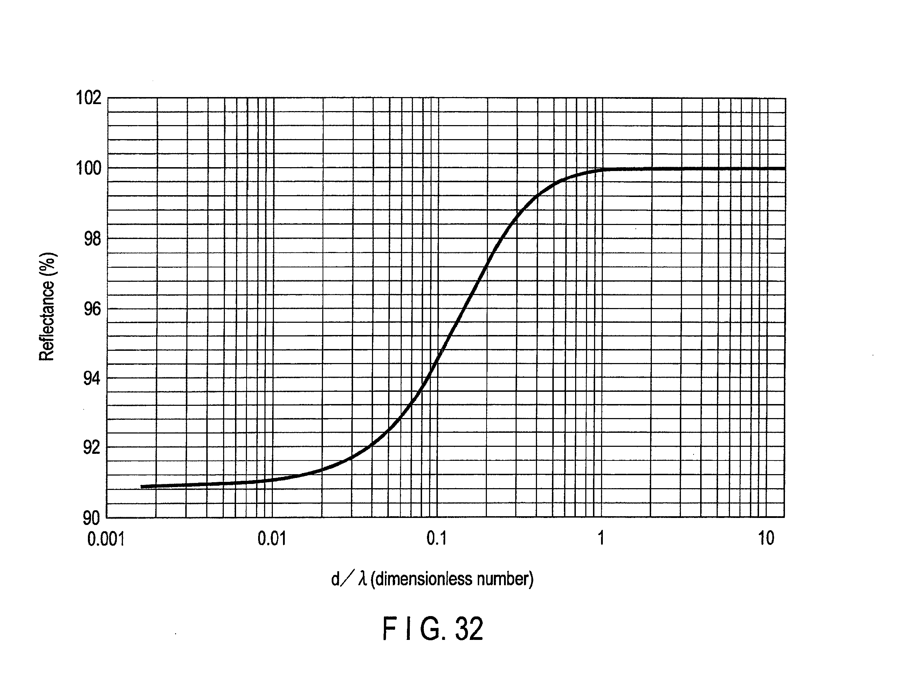

FIG. 32 shows the relationship between of d/A and the reflectance assumed when the light guide member 11 is formed of acryl, the base is formed of aluminum, and the light guide member 11 exhibits total internal reflection at an incident angle of 45°. It is evident from this figure that if $d/\lambda > 1$, i.e., $d > \lambda$, the reflection is close to 100%, while if $d/\lambda < 1$, i.e., $d < \lambda$, light is absorbed by the base 20, and the reflection is recued as d is closer to 0.

Thus, the light emitted from the light source 40 is transmitted through the light guide member 11 as a result of its total internal reflection between the outside (ambient environment) air and the air of the reflective layer 13. The light, which has struck upon the diffusion portion 12 and hence has stopped fulfilling the total internal reflection condition, is emitted from the first surface 11a of the light guide member 11 to the outside of the lighting device 100.

As shown in FIGS. 2 and 3, the lighting device 100 has a shading cover 22. The shading cover 22 is attached to the first surface 20a of the base 20 to thereby fix the light guide member 11. The shading cover 22 extends along, for example, part of the first surface 20a of the base 20 and part of the first surface 11a of the light guide member 11, and covers the lower ends of the light sources 40. The shading cover 22 is formed in, for example, a substantially rectangular shape, and has an outer surface 22a exposed to the ambient environment, and an inner surface 22b kept in contact with the light guide member 11 and the base 20. Part of the heat generated by the light sources 40 is transmitted to the shading cover 22 via the base 20. The shading cover 22 may be formed to cover the entire first surface 21a of the base 20.

The shading cover 22 is provided in a position that falls within a range in which part of the light emitted from the light source 40, which does not satisfy the total internal reflection condition of the light guide member 11, is prevented from being emitted to the outside of the lighting device 100. That is, the shading cover 22 blocks light directly emitted from the light sources, and/or indirect light reflected and diffused from the side surfaces 11c of the light guide member 11 (i.e., blocks the light that does not enter the light guide member 11). The shading cover 22 may include a screw hole, a screw box or a hole formed therein for connection to the base 20. The shading cover 22 may also include a convex portion (not shown) kept in contact with the first surface 11a of the light guide member 11 for keeping a distance not less than the wavelength of light from the light guide member 11.

The shading cover 22 is formed of an opaque material or a material coated with opaque painting, which does not pass leakage light. As the material of the shading cover 22, a synthetic resin excellent in strength and thermal resistance, such as polycarbonate, or a material excellent in thermal conductivity, such as an aluminum alloy or a copper alloy, is used. A radiation layer (not shown) may be provided as each of the outer and inner surfaces 22a and 22b of the shading cover 22. The radiation layer is formed of alumite produced by a surface treatment, or of painting, etc. If the radiation layer is formed of a material, such as white painting, which has a low absorbance of visible light, light loss at the shading cover 22 can be reduced. The outer and inner surfaces 22a and 22b of the shading cover 22 may be glossy surfaces formed by polishing, painting, metal deposition, etc. In this case, light loss at the shading cover 22 can be reduced, although radiation is suppressed.

The light sources 40 and the substrate 41, the substrate 41 and the base 20, the base 20 and the shading cover 22, the base 20 and the casing body 21, and the casing body 21 and the mounting portion 60 are mutually connected through a sheet, an adhesives tape, an adhesive and/or a thermal grease (not shown), which are excellent in thermal conductivity. This enables the heat generated by the light sources 40 to be transmitted to each component, thereby reducing the contact thermal resistance of each component. If electric insulation is required, they may be connected via an electrically insulating material (such as an insulating sheet).

A description will now be given of the power supply circuit 34.

As shown in FIG. 3, the power supply circuit 34 (power supply circuit board) which supplies electric power to the light sources 40 is provided in the casing 10. The power supply circuit 34 receives an alternating voltage (of, for example, 100V), converts the same into a direct current, and applies the direct current to the light sources 40.

A first wire 54 (a first conductor, a first power wire) connects the power supply circuit 34 to the electrical contact 33. A second wire 55 (a second conductor, a second power wire) connects the power supply circuit 34 to the substrate 41. That is, the power supply circuit 34 and the light source 40 are electrically connected by the second wire 55. The second portion 52 of the base 20 may be provided with a through hole 20d for inserting therethrough the second wire 55. The second wire 55 is inserted through the through hole 20d into the casing 10. To prevent light leakage, the through hole 20d may be filled with a resin after the second wire 55 is inserted therethrough.

The mounting portion 60 is provided at the ceiling 32 of the casing body 21. The power supply circuit 34 may be provided in the mounting portion 60. The mounting portion 60 or the casing 10 may contain a desirable combination of desirable devices, in addition to the power supply circuit. For example, they may contain a toning circuit, a light control circuit, a radio circuit, a primary cell, a rechargeable battery, a Peltier device, a microphone, a loudspeaker, a radio, an antenna, a clock, an ultrasonic generator, a camera, a projector, a liquid crystal display, an interphone, a fire alarm, an alarm, a gas componential analysis sensor, a particle counter, a smoke sensor, a motion sensor, a human sensing sensor, a distance sensor, an illuminance sensor, an atmospheric pressure sensor, a magnetism sensor, an acceleration sensor, a temperature sensor, a moisture sensor, an inclination sensor, an acceleration sensor, a GPS antenna, a Geiger counter, a ventilation fan, a humidifier, a dehumidifier, an air purifier, a digester, a sterilization agent, a deodorizer, an aromatic, an insect protection agent, an antenna, a CPU, a memory, a motor, a propeller, a fan, a fin, a pump, a heat pump, a heat pipe, a wire, a cleaner, a dust collection filter, a wireless LAN access point, a relay device, an electromagnetic shielding function, a wireless power transmitter, a wireless power receiver, a photocatalyst, a solar battery, etc.

(Explanation of function)

If the lighting device 100 is fitted in a socket with the center axis C set parallel to the direction of gravity as shown in FIG. 3, the mounting portion 60 is positioned on the upper side, and the light guide member 11 is positioned on the lower side. Where the mounting portion 60 of the lighting device 100 is fitted in the socket that is, for example, buried in the ceiling of a room or incorporated in a light device, if power is supplied to the socket, the light sources 40 provided on one side of the light guide member 11 emit light to the outside through the first surface 11a of the light guide member 11.

More specifically, the light guide member 11 guides, to the diffusion portion 12, the light emitted from the light sources 40 and received through the side surfaces 11c. The light reaching the diffusion portion 12 is diffused by the diffusion portion 12, and emitted from the light guide member 11 to the outside. Thus, the flux of light finally emitted from the light guide member 11 serves as light of a wide distribution by the two effects, i.e., the light guide and the light diffusion by the diffusion portion 12.

The light sources 40 generate heat when emitting light. The heat is transmitted from the light sources 40 to the substrate 41, and then to the base 20. Part of the heat transmitted to the base 20 is then transmitted from the second portion 52 to the light guide member 11, and emitted from the surface of the light guide member 11 to the outside by convection and radiation. That is, in the first embodiment, both light and heat are emitted from the surface of the light guide member 11.

Other part of the heat transmitted to the base 20 is transmitted to the shading cover 22, and is emitted from the surface of the shading cover 22 to the outside by convection and radiation. Other part of the heat transmitted to the base 20 is emitted from the surface of the base 20 to the outside by convection and radiation. Other part of the heat transmitted to the base 20 is transmitted to the casing body 21. Part of the heat transmitted to the casing body 21 is transmitted to the mounting portion 60, and emitted to the outside through a socket (not shown). Other part of the heat transmitted to the casing body 21 is emitted from the surface of the casing body 21 to the outside by convection and radiation.

As described above, the contact thermal resistance of each element can be reduced by thermally connecting the light sources 40 and the substrate 41, the substrate 41 and the base 20, the base 20 and the shading cover 22, the base 20 and the casing body 21, and the casing body 21 and the mounting portion 60, using a grease, a sheet or tape that is excellent in thermal conductivity, or using thermal connection by, for example, screws. If electric insulation is required, they may be connected via an electrically insulating material (such as an insulating sheet).

In the above-constructed lighting device 100, enhancement of thermal dissipation and expansion of internal space can be simultaneously realized, with, for example, the light distribution angle, total luminous flux, size, etc. of a conventional light device maintained. For comparison, a consideration will be given to a downlight LED lighting that uses a diffusion cover for a light distribution angle and glare reduction. In such a lighting device, a certain space is needed between an LED and a diffusion cover, whereby substantially the half area of the downlight is occupied by the diffusion cover. Moreover, since the diffusion cover is formed of a resin, such as polycarbonate, heat is not easily transmitted and hence thermal dissipation is performed in areas other than the diffusion cover.

In contrast, the lighting device 100 according to the first embodiment comprises the light guide member 11, at least one light source 40, the substrate 41 provided with the light source 40, and the casing 10. The light guide member 11 has the first surface 11a exposed to the outside, the second surface of 11b opposite to the first surface 11a, and the side surfaces 11c extending between the first and second surfaces 11a and 11b, and is provided with the diffusion portion 12. The light source 40 faces the side surface 11c of the light guide member 11. The casing 10 has a metal thermal dissipation portion (the second portion 52) extending along the second surface 11b of the light guide member 11, and supports the substrate 41 such that it is thermally connected to the light source 40.

By virtue of the above structure, the amount of heat dissipated from the casing 10 to the outside via the light guide member 11 is increased. Thus, thermal dissipation of the lighting device 100 is promoted. That is, even if the light source 40 is positioned close to the light guide member 11, substantially the entire surface of the light guide member 11 can be made to radiate by the diffusion portion 12. Furthermore, by locating the metal casing 10 inside the light guide member 11, the surface temperature of the light guide member 11 can be increased, and heat can be dissipated from substantially the entire surface of the light guide member 11 (that is, thermal dissipation can be also performed from the light-emitting surface). Thus, both light and heat can be emitted from the surface of the light guide member 11.

Moreover, according to the above-described structure, the light emitted from the light source 40 is efficiently guided to the diffusion portion 12 via the light guide member 11, and is efficiently diffused and emitted through the diffusion portion 12. This can realize a lighting device 100 that is free from glare and has a thin light-emitting portion. In other words, the use of the light guide member 11 and the diffusion portion 12 can reduce a light-transmission space within the lighting device 100, compared to a case where a diffusion cover, which requires a predetermined distance or more from the light source 40 (for example, a COB or a plurality of SMDs) for reduction of glare and/or securing of light distribution, is used.

Thus, the lighting device of the embodiment can have an increased thermal dissipation area and a wide internal space in the casing 10. This means that a space in the lighting device 100, which is used to accommodate additional components, such as the power supply circuit 34, can be increased. As a result, various components, such as a battery, a loudspeaker and a projector, can be arranged, as well as the LED and the power supply circuit. This enhances the added value of the lighting device 100, or enables the lighting device 100 to be made more compact.

In the first embodiment, the light sources 40 face the side surfaces 11c of the light guide member 11. This structure enables the light guide member 11 to be made thin, and hence enables the thermal dissipation portion (the second portion 52) of the casing 10 to be provided near the outside (ambient environment) of the lighting device 100. As a result, thermal dissipation by the lighting device 100 can be further promoted.

In the first embodiment, the light guide member 11 is formed to be polygonal. A plurality of light sources 40 are arranged along one or more side surfaces 11c of the light guide member 11. The polygonal light guide member 11 can be produced at low cost, and hence enables the lighting device 100 to be produced at low cost. In particular, a rectangular light guide member 11 can be produced at lower cost.

In the first embodiment, the diffusion portion 12 is formed to be circular and provided at the center of the polygonal light guide member 11. By virtue of this structure, even if the light sources 40 are opposed the side surfaces of the polygonal light guide member 11, the same luminous distribution (appearance) as in a case where a light source, such as a COB, is provided at the center of the base 20 can be acquired.

In the first embodiment, the reflective layer 13 is provided between the light guide member 11 and the base 20. With this structure, the light transmitted to the light guide member 11 can be prevented from being absorbed by the surface of the base 20, and the radiation efficiency of the lighting device 100 can be increased. As a result, the total luminous flux with respect to energy consumption can be further increased.

In the first embodiment, the light guide member 11 is provided near the base 20, with the reflective layer 13 interposed therebetween. This structure enables the heat of the base 20 to be transmitted to the light guide member 11 through the reflective layer 13, thereby enhancing the thermal dissipation of the lighting device 100.

In the first embodiment, the thickness d of the reflective layer 13 is set greater than the wavelength $\lambda$ of light emitted from the light sources 40. As a result, the reflection factor of the light transmitted through the light guide member 11 can be set close to 100%, almost all of the light transmitted through the light guide member 11 can be obtained as illumination light from the outside, and light loss due to the light absorbance of the base 20 can be minimized. Further, because of this, the base 20 fades into the background, and is little seen from the outside of the lighting device 100. That is, the device 100 looks better.

A radiation layer (not shown) may be provided on the surface of the base 20. The radiation layer is an alumite layer formed by a surface treatment, a painted layer, or the like. If the radiation layer is formed of a material with a low absorbance of visible light, such as white paint, light loss at the surface of the base 20 can be reduced. The surface of the base 20 may be formed to be a glossy surface by polishing, painting, metal deposition, etc. In this case, although radiation is suppressed, light loss at the surface of the base 20 can be reduced.

In the first embodiment, a thermal connection portion (a convex or concave portion) for adjusting the distance d between the light guide member 11 and a surface of the base 20 opposing the light guide member 11 to thereby accelerate dissipation of heat to the light guide member 11 may be provided on that surface of the base 20, or on the light guide member 11. The base 20 and the light guide member 11 are connected via the shading cover 22. Alternatively, the light guide member 11 may be directly connected to the base 20 by means of screws or adhesive, without the shading cover 22.

In order to promote thermal dissipation from the casing body 21 to the ambient environment, a radiation layer may be provided on surfaces of the casing body 21 that are exposed to air. The radiation layer is an alumite layer formed by a surface treatment, or a painted layer. If the radiation layer is formed of a material with a low absorbance of visible light, such as white paint, light loss at the surface of the casing body 21 can be reduced.

In the first embodiment, the light sources 40 are arranged at regular intervals around the light guide member 11, they may be arranged irregularly. If the light sources 40 are arranged densely at the center of each side of the light guide member 11, radiation efficiency can be further increased. Moreover, the number of light sources 40 may be varied between the sides of the light guide member 11. This structure can enhance the degree of freedom of designing the light-emitting portion.

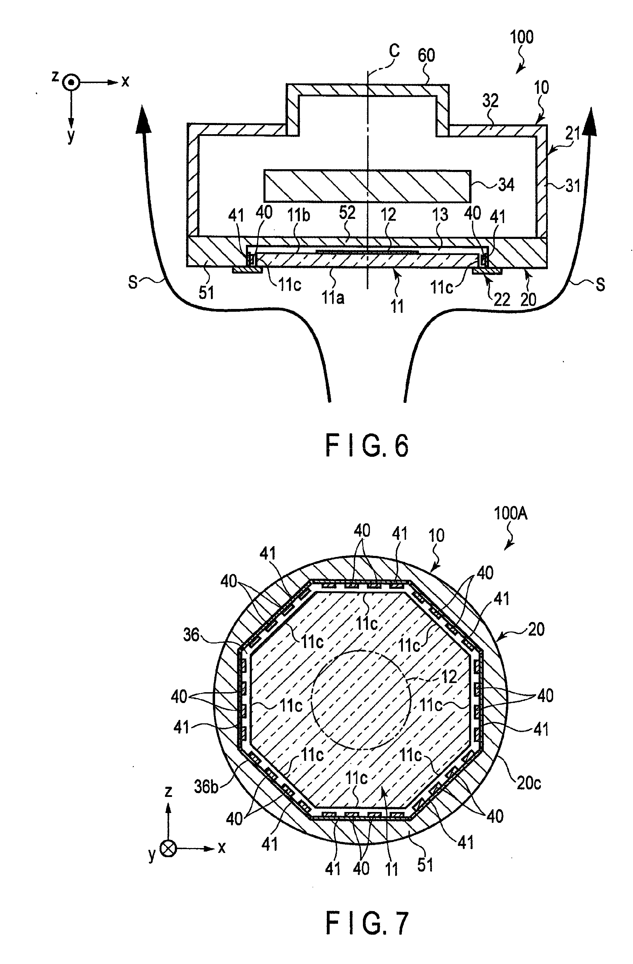

Further, the heat dissipated from the light guide member 11, the shading cover 22, the base 20 and the casing body 21 warms the ambient air of the lighting device 100. The warmed air rises by convection along the peripheral surfaces of the device 100 in a direction opposite to the gravitational direction, as is indicated by streamlines S in FIG. 6. The flowing air gradually rises in temperature, as it flows upward along the peripheral surfaces of the lighting device 100. That is, along the surfaces of the lighting device 100, the temperature of air is lowest near the lower end of the lighting device 100, and gradually rises as the air approaches the upper end. By positioning the light guide member 11 and the light source 40 at the lower end of the lighting device 100 as in the first embodiment, the light sources 40 can be efficiently cooled by air of a lower temperature.

The shading cover 22 is secured to the base 20 by, for example, a screw. The distance between the shading cover 22 and the light guide member 11 can be appropriately adjusted by providing a concave or convex portion at a surface of the shading cover 22 kept in contact with the light guide member 11.

Further, the distances between the light guide member 11 and the shading cover 22 and between the light guide member 11 and the base 20 can be appropriately adjusted by providing concave or convex portions on respective surfaces of the shading cover 22 and the base 20 kept in contact with the light guide member 11.

Furthermore, an appropriate gap can be defined between each light source 40 and the light guide member 11 by securing the light guide member 11, the shading cover 22 and the base 20, using concave and/or convex portions, with the result that adverse influence due to the difference in coefficient of thermal expansion between the light sources 40 and the light guide member 11 can be avoided. In addition, the light guide member 11 can be kept away from the light sources 40 that will reach a high temperature. That is, the temperature of the light guide member 11 can be set to be not higher than that of the light sources 40. This structure enables greater power to be applied to the light sources 40 to thereby obtain greater total luminous flux, when the light guide member 11 is formed of a material having a thermal resistance temperature not higher than that of the light guide member 11, such as acryl. The light guide member 11, the shading cover 22 and the base 20 may be secured by other means, such as adhesive.

The second wire 55 may be directly connected to the electrical contact 33, or either the second wire 55 or the contact 33 may be connected to the base 20. By connecting the second wire 55 to the base 20, the number of required wires can be reduced, and the appearance of the resultant structure can be enhanced. In this case, means for electrically connecting the electrical contact 33 to the light source 40 is needed. To provide the means, all or part of the bases 20, the housing bodies 21 and the fixing member 25 should be formed of a conductive material. Further, in this case, it is necessary to electrically isolate portions of the casing body 21 and the base 20 that are in contact with the ambient environment, using painting or a resin member.

In the first embodiment, although the base 20, the casing body 21 and the shading cover 22 are formed as separate members, part or all of them may be formed integral as one body. It is difficult to produce this device. However, in this case, the contact thermal resistance in each junction between components can be eliminated, and hence thermal dissipation performance can be further enhanced.

The fixing member 25 may have electrical conductivity, may be formed of a highly electrically insulative material, such as polybutylene terephthalate (PBT), polycarbonate, polyetheretherketone (PEEK), etc., or may have a surface layer of a highly electrically insulative material. In this case, electrical defects can be avoided when the power supply circuit 34 is positioned in the fixing member 25. The wire 55 has both positive and negative electrodes thereof connected to the power supply circuit 34. If there is no power supply circuit 34, the wire 55 is directly connected to the electrical contact 33.

A case may also be provided to contain the power supply circuit 34. The case may be formed of a highly electrically insulative material, such as polybutylene terephthalate (PBT), polycarbonate, polyetheretherketone (PEEK), etc., or may have a surface layer of a highly electrically insulative material. In this case, electrical defects can be avoided when an electrical circuit (not shown) is provided in the casing body 21.

Lighting devices 100A to 100I according to second to tenth embodiments will be described. In these embodiments, elements similar to those of the first embodiment are denoted by corresponding reference numbers, and no detailed description will be given thereof. Further, the structures other than those described below are the same as the first embodiment.

(Second embodiment)

FIG. 7 shows a lighting device 100A according to a second embodiment. In the second embodiment, the light guide member 11 is formed octagonal. The same number of substrates 41 provided with the light sources 40 as the sides of the light guide member 11 are arranged along the side surfaces 11c of the octagonal member 11. By virtue of this structure, the light distribution of the light guide member 11 can be made closer to the outer circular shape of the lighting device 100A. The lighting device 100A can also enhance heat dissipation, like the first embodiment described above. The light guide member 11 may have other desired polygonal or circular shapes. The substrates 41 provided with the light sources 40 may be arranged polygonal or circular in accordance with the shape of the light guide member 11.

(Third embodiment)

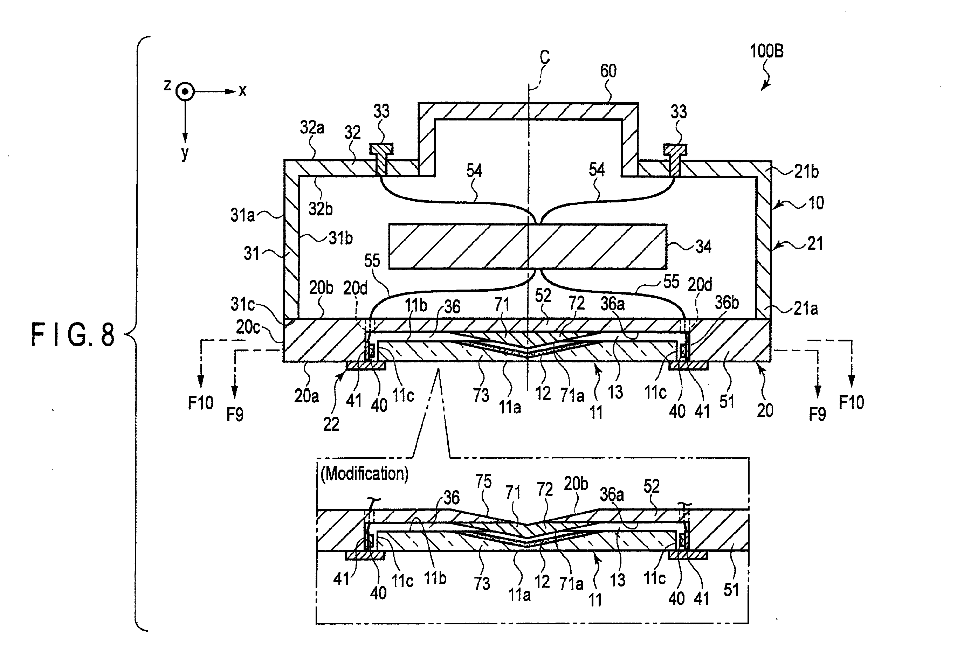

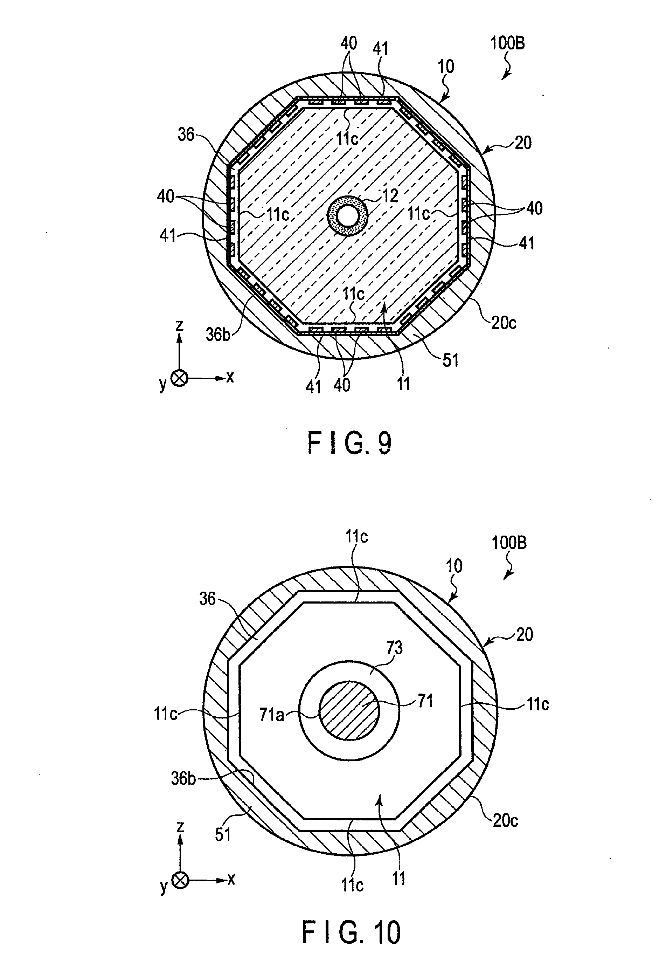

FIGS. 8 to 10 show a lighting device 100B according to a third embodiment. The lighting device 100B of the third embodiment comprises a reflective member 72, in addition to the components of the lighting device 100 of the first embodiment.

More specifically, in the third embodiment, the second portion 52 (heat dissipation portion) of the base 20 has an inclined portion 71 that extends along the second surface 11b of the light guide member 11 and is gradually outwardly thickened toward the center of the light guide member 11. The inclined portion 71 is formed of, for example, a metal, and is thermally connected to the light source 40 through the base 20.

A portion (lower end portion) of the inclined portion 71 is closer to the first surface 11a of the light guide member 11 than to at least part of the second surface 11b of the light guide member 11. The "at least part" of the second surface 11b means, for example, a portion of the second surface 11b positioned away from a thin portion 73 described later. That is, a portion of the inclined portion 71 is closer to the ambient environment than the second surface 11b of the light guide member 11. This structure further enhances the heat dissipation from the second portion 52 of the base 20 to the ambient environment.

The inclined portion 71 is formed by attaching, for example, a conical reflective member 72 to the ceiling 36a of the receiving portion 36 of the base 20. However, instead of attaching a separate piece to the base 20, the inclined portion 71 may be formed integral with the base 20 as one body.

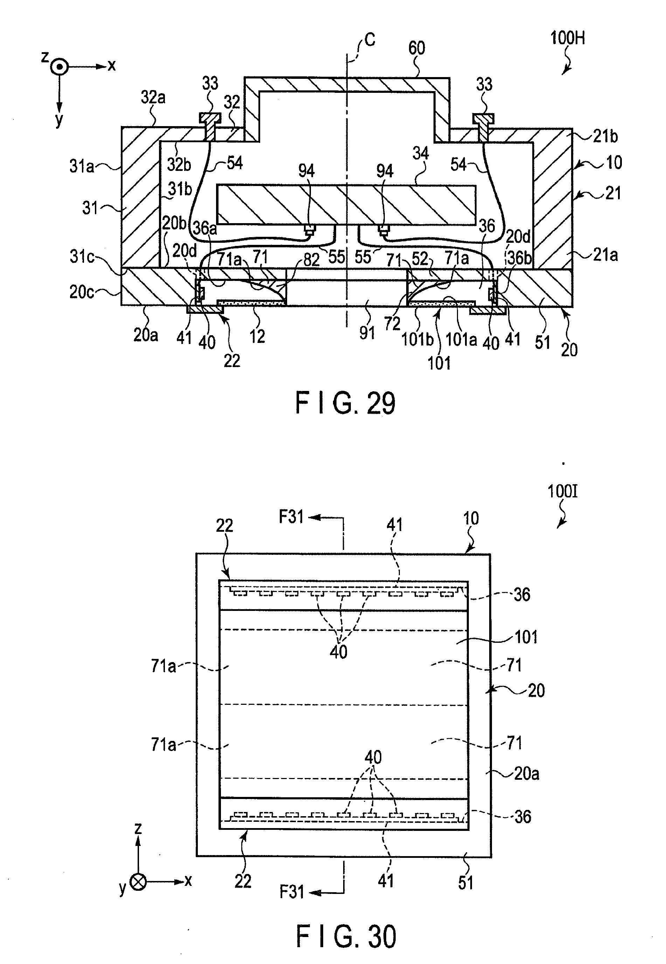

The inclined portion 71 has a reflective surface 71a that faces the light sources 40 along, for example, the second surface 11b of the light guide member 11, and is configured to outwardly reflect light emitted from the light sources 40. In the third embodiment and all embodiments below, the reflective surface 71a is not limited to the shown flat surface, but may be a curved surface as shown in FIG. 29. Yet alternatively, the reflective surface 71a may comprise a plurality of flat or curved surfaces like a facet mirror. If the reflective surface 71a is a curved surface, it may be a downwardly projecting curved surface or an upwardly projecting curved surface. The shape of the curved surface may be designed arbitrarily in accordance with desired characteristics of the lighting device 100B. Further, like a modification shown in FIG. 8, the base 20 may have a thin portion 75 (depression) that is gradually thinned toward the center of the base 20. The thin portion 75 is formed by inclining part of the second surface 20b of the base 20 along the outline of the inclined portion 71. The provision of the thin portion 75 can reduce the weight of the base 20.

On the other hand, the light guide member 11 has a thin portion 73 that extends along, for example, the outline of the inclined portion 71 and is gradually thinned toward the center of the light guide member 11. The thin portion 73 is formed by, for example, inclining the second surface 11b of the light guide member 11 toward the first surface 11a of the same. In the thin portion 73, the second surface 11b of the light guide member 11 is substantially parallel with the reflective surface 71a of the inclined portion 71.

The lighting device 100B constructed as the above can also enhance heat dissipation as in the first embodiment. Furthermore, in the third embodiment, the heat dissipation portion (second portion 52) of the casing 10 has the inclined portion 71 that is gradually thickened toward the center of the light guide member 11 outwardly of the casing 10. This structure enables the distance between the heat dissipation portion of the casing 10 and the ambient environment to be reduced, thereby further promoting the heat dissipation of the lighting device 100B.

In the third embodiment, the inclined portion 71 has the reflective surface 71a that reflects light, emitted from the light sources 40, to the first surface 11a of the light guide member 11. This structure can reduce the ratio of light emitted from light sources 40 on a certain side and absorbed by light sources 40 on a side opposed to the certain side, to the whole light emitted from the light sources 40 on the certain side. That is, the structure can enhance the radiation efficiency of the lighting device 100B.

In another aspect, the lighting device 100B according to the third embodiment comprises at least one light source 40, a substrate 41 provided with the light source 40, a light-transmitting member (for example, the light guide member 11), a casing 10 supporting the substrate 41, and an inclined portion 71 provided in the casing 10. The light-transmitting member has a first surface 11a exposed to the outside, and a second surface 11b opposite to the first surface 11a, thereby passing light therethrough, and also has a diffusion portion 12. The inclined portion 71 extends along the second surface 11b of the light-transmitting member, and is gradually outwardly thickened toward the center of the casing 10. The inclined portion 71 is configured to outwardly reflect light emitted from the light sources 40. This structure enables the light-emitting portion of the lighting device 100B to be made thin, and enables the radiation efficiency of the device 100B to be enhanced.

In the third embodiment, the thin portion 73 of the light guide member 11 extends along the outline of the inclined portion 71, and is gradually thinned toward the center of the light guide member 11. The thin portion 73 is formed by inclining the second surface 11b of the light guide member 11 toward the first surface 11a of the same. Since in this structure, the center portion of the light guide member 11 is formed thin, the thermal resistance of the light guide member 11 is reduced, which further enhances the heat dissipation of the lighting device 100B. Moreover, the thin portion 73 constructed as the above makes it easy to realize circular light emission and light distribution control of the lighting device 100B.

In addition, the inclined portion 71 may be coated with a radiation layer of high thermal radiation, such as an alumite layer formed by a surface treatment, or a painted layer. If a material having low absorbance of visible light, such as white paint, is used for the radiation layer, light loss at the surface of the inclined portion 71 can be reduced. The surface of the inclined portion 71 may be formed to be a glossy surface by polishing, painting, metal deposition, etc. In this case, although radiation is suppressed, light loss at the surface of the inclined portion 71 can be reduced.

(Fourth embodiment)

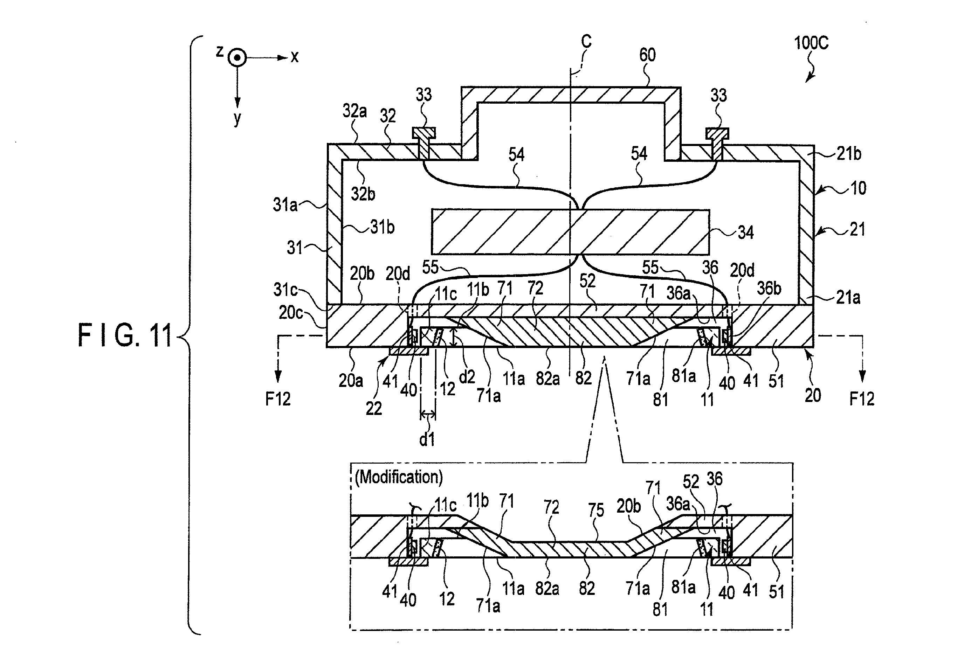

FIGS. 11 to 15 show a lighting device 100C according to a fourth embodiment. The lighting device 100C of the fourth embodiment differs from the lighting device 100B of the third embodiment in that in the former, the light guide member 11 is formed annular (in the shape of a frame), and the heat dissipation portion (second portion 52) of the casing 10 is exposed to the outside of the lighting device. In this embodiment, the light guide member 11 is formed annular. However, it may be formed to be a polygonal frame.

More specifically, in the fourth embodiment, the light guide member 11 has an opening 81 formed therethrough from the second surface 11b to the first surface 11a. The opening 81 is formed annular as an example, in view of design and facility of processing. However, it may be formed to be a polygonal frame, such as a rectangular or octagonal frame.

The second portion 52 of the base 20 is inserted in the opening 81 of the light guide member 11, and includes a projection 82 exposed to the outside of this lighting device 100C through the opening 81. That is, the projection 82 is exposed to air existing outside the lighting device 100C. The projection 82 is formed of, for example, a metal, and is thermally connected to the light sources 40 through the base 20.

The projection 82 includes the inclined portion 71. The projection 82 projects to a position lower than, for example, the light sources 40. That is, part of the projection 82 is located closer to the ambient environment than the light sources 40. As a result, dissipation of heat from the projection 82 to the ambient environment is further enhanced. The lower end of the projection 82 has an end face 82a that extends substantially parallel to the first surface 11a of the light guide member 11. For instance, the end face 82a is substantially level with the first surface 11a of the light guide member 11. The size and/or shape of the projection 82 is not particularly limited. For instance, the lower end of the projection 82 may be located above the light sources 40. Further, like a modification shown in FIG. 11, the base 20 may have a thin portion 75 (depression) that is gradually thinned toward the center of the base 20. The thin portion 75 is formed by inclining part of the second surface 20b of the base 20 along the outline of the inclined portion 71. The provision of the thin portion 75 can reduce the weight of the base 20.

As shown in FIG. 11, the light guide member 11 has an inner peripheral surface 81a that defines the opening 81. The inner peripheral surface 81a vertically extends, intersecting with the second surface 11b of the light guide member 11. Accordingly, the light guided from the light sources 40 to the side surfaces 11c of the light guide member 11 directly reaches the inner peripheral surface 81a, or reaches the inner peripheral surface 81a after it is totally reflected by the first or second surface 11a or 11b of the light guide member 11. At least part of the reached light is radiated therefrom.

A diffusion portion 12 is provided on the inner peripheral surface 81a of the light guide member 11. The inner peripheral surface 81a inclines with respect to the second surface 11b of the light guide member 11. More specifically, the inner peripheral surface 81a inclines such that its inner diameter gradually increases from the second surface 11b to the first surface 11a of the light guide member 11.

Furthermore, in the fourth embodiment, distance d1 between the side surface 11c and the inner peripheral surface 81a of the light guide member 11 is set substantially equal to distance d2 (namely, the thickness of the light guide member 11) between the first and second surfaces 11a and 11b of the light guide member 11. This is because the shorter the distance between the light sources 40 and the diffusion portion 12, the greater the efficiency of diffusion of light. Distance d1 is, for example, the distance between the side surface 11c and the thickness-wise central portion of the diffusion portion 12. It is not necessary to set distance d1 strictly equal to the thickness of the light guide member 11. Even if distance d1 is slightly varied, light can be efficiently diffused.

In the fourth embodiment, the light guide member 11 is formed octagonal, for example. This structure enables the distance between the light sources 40 and the inner peripheral surface 81a (light-emitting surface) to be shortened. The shape of the light guide member 11 may be a rectangle or any other polygon, or a circle.

The surface of the projection 82 may be coated with a radiation layer of high thermal radiation, such as an alumite layer formed by a surface treatment, or a painted layer. If a material having low absorbance of visible light, such as white paint, is used for the radiation layer, light loss at the projection 82 can be reduced. The surface of the projection 82 may be formed to be a glossy surface by polishing, painting, metal deposition, etc. In this case, light loss at the surface of the projection 82 can be reduced.

The lighting device 100C constructed as the above can exhibit enhanced thermal-dissipation performance, like the lighting device of the first embodiment. Further, like the structure of the second embodiment, the structure of the fourth embodiment can reduce the ratio of the light emitted from light sources 40 on a certain side and absorbed by light sources 40 on a side opposed to the certain side, to the whole light emitted from the light sources 40 on the certain side. That is, the structure can enhance the radiation efficiency of the lighting device 100C.

Furthermore, in the fourth embodiment, the light guide member 11 has the opening 81 formed therethrough from the second surface 11b to the first surface 11a. The inclined portion 71 is inserted in the opening 81 of the light guide member 11, and is exposed to the outside of the lighting device 100C through the opening 81. In this structure, since the inclined portion 71 is directly exposed to ambient air, the thermal resistance of the light guide member 11 further decreases, which further enhances the thermal dissipation performance of the lighting device 100C.

In the fourth embodiment, the diffusion portion 12 is formed on the inner peripheral surface 81a of the opening 81 of the light guide member 11. The inner peripheral surface 81a inclines such that its inner diameter gradually increases from the second surface 11b to the first surface 11a of the light guide member 11. By virtue of this structure, diffused light at the inner peripheral surface 81a is widely emitted without again entering the light guide member 11. As a result, the radiation efficiency of the lighting device 100C is enhanced.

A description will now be given of the relationship between inclination angle α of the inner peripheral surface 81a (diffusion portion 12) and the light distribution angle, and the relationship between inclination angle β of the inclined portion 71 and the efficiency (irradiation efficiency).

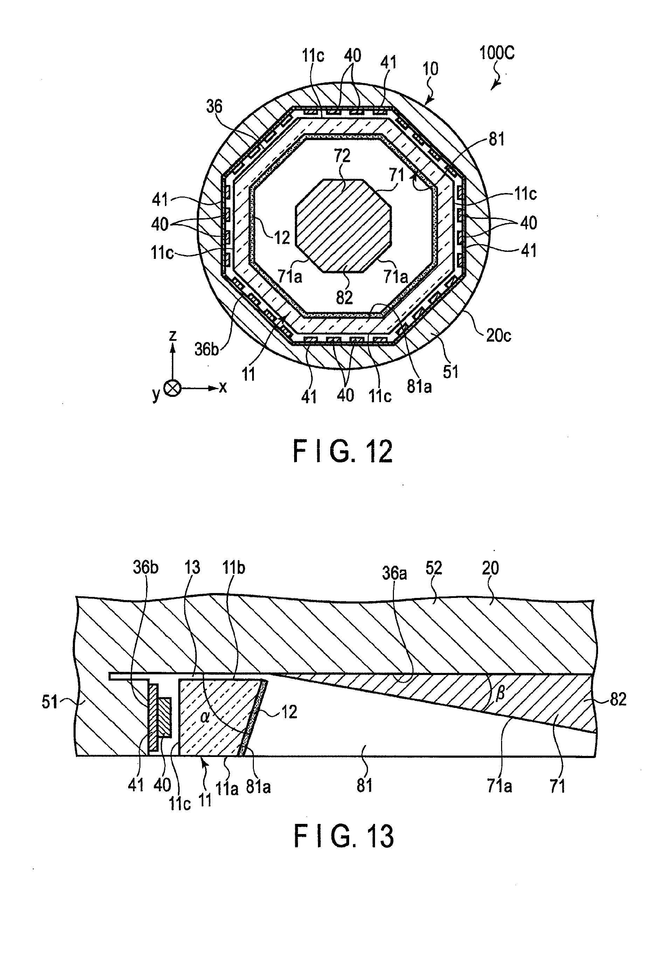

FIG. 13 is an enlarged view showing the light guide member 11 and its circumference. In FIG. 3, the diffusion portion 12 inclines by angle α with respect to the second surface 20b of the base 20. The inclined portion 71 inclines by angle β with respect to the second surface 20b of the base 20. There is a direct relationship between angles α and β and the performance, especially, the light distribution angle and efficiency, of the lighting device 100C.

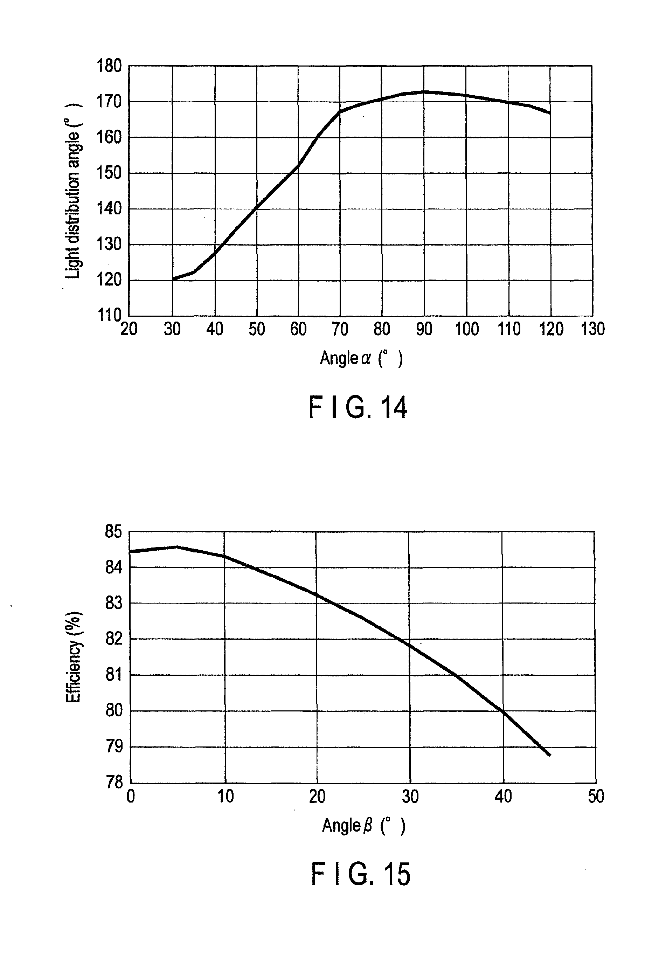

FIG. 14 is a graph showing the relationship between the angle α and light distribution angle of the diffusion portion 12. Further, FIG. 14 is a graph obtained when the light-emitting surfaces of the light sources 40 are substantially parallel to the side surfaces 11c of the light guide member 11 (for example, when each of the light-emitting surfaces of the light sources 40 and the side surfaces 11c of the light guide member 11 is substantially parallel to the center axis C). As shown in FIG. 14, the light distribution angle of the lighting device 100C is dependent on angle α. In view of this, the inclination angle of the diffusion portion 12 is set referring to a target light distribution angle of the lighting device 100C shown in the graph of FIG. 14. Alternatively, in association with a desired light distribution angle, angle α may be selected within a range of ±10°, instead of selecting a corresponding angle on the shown curve.

In the fourth embodiment, angle α is set to an angle falling within a range of from not less than 70° to less than 90° with respect to the second surface 20b of the base 20. This enables a great light distribution angle to be realized, as is shown in FIG. 14. Specifically, angle α is, for example, 85°.

Light diffused on the surface of the inclined portion 71 returns to the light guide member 11, and then enters the light sources 40 and the base 20, where the light is absorbed and converted into heat. The larger angle β, the greater the resultant heat. In view of this, angle β of the reflective member 72 is set as follows: FIG. 15 is a graph showing the relationship between angle β and the efficiency. The "Efficiency" in FIG. 15 is the ratio of the flux of emitted light to the total luminous flux of the light sources 40 of the lighting device 100C. As shown in FIG. 15, the efficiency is dependent on angle β. In view of this, angle β is set to a value at which the maximum efficiency is obtained. From FIG. 15, it is evident that when angle β is set within a range of 0 to 10°, the maximum efficiency is obtained. The inclined portion 71 may have any shape. It is sufficient if it absorbs or reflects light directed from the diffusion portion 12 to the center of the opening 81.

(Modification of fourth embodiment)

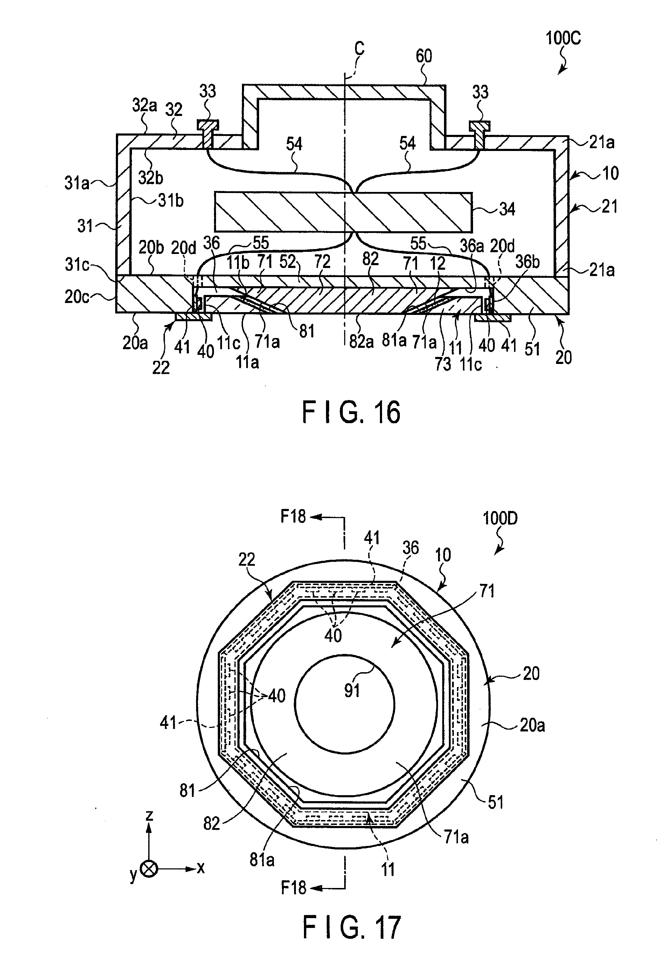

FIG. 16 shows a modification of the lighting device 100C of the fourth embodiment. The light guide member 11 is not limited to that shown in FIG. 11 where distance d1 between the side surfaces 11c and the inner peripheral surface 81a is set short. The inner peripheral surface 81a of the light guide member 11 may be provided along the inclined portion 71 as shown in FIG. 16. In addition, assuming that a structure shown in FIG. 11, where distance d1 between the side surfaces 11c and the inner peripheral surface 81a of the light guide member 11 is set short, is the first embodiment, and that a structure shown in FIG. 16, where the light guide member 11 has a relatively wide width, is the second embodiment, fifth to tenth embodiments described below may employ which one of the structures of the first and second embodiments.

(Fifth embodiment)

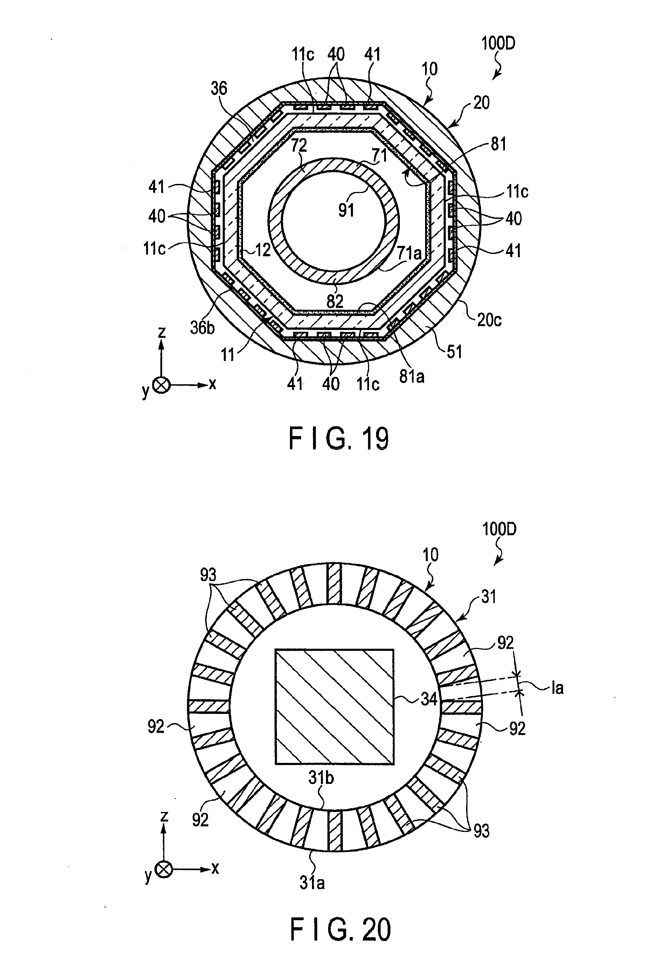

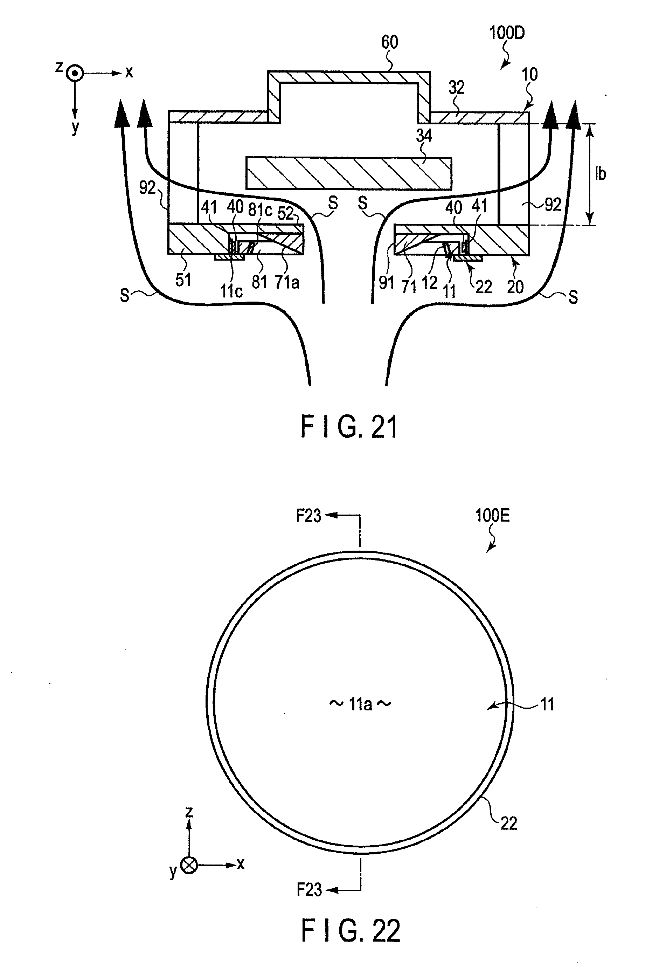

FIGS. 17 to 21 show a lighting device 100D according to a fifth embodiment. The lighting device 100D of the fifth embodiment is obtained by forming a through hole 91 in the central portion of the casing 10 of the lighting device 100C of the fourth embodiment.
More specifically, in the fifth embodiment, the casing 10 has a through hole 91 opening inside the opening 81 of the light guide member 11. The through hole 91 is formed through the second portion 52 and the projection 82 of the base 20, and opens to the outside of the lighting device 100D. Thus, the through hole 91 makes the interior of the casing 10 communicate with the outside of the lighting device 100D. This enables relatively-cold external air to flow into the casing 10, which promotes thermal dissipation of the casing 10 from both inside and outside simultaneously, and also promotes thermal dissipation of components housed in the casing 10. The through hole 91 may have substantially the same diameter as, for example, the maximum diameter of the inclined portion 71. However, the size of the through hole 91 is not limited.
As shown in FIG. 20, the side surface 31a of the casing 10 has at least one air hole 92 for permitting air, which has flown from the outside of the lighting device 100D into the casing 10 through the through hole 91, to be discharged to the outside of the casing 10. For instance, the casing 10 is formed to be cylindrical. The side surface 31a of the casing 10 is formed by arranging a plurality of plate members (fins) 93. These plate members 93 are circumferentially arranged at regular intervals and are extended radially. The plate members 93 serve as fins, and the gaps between the plate members 93 serve as the air holes 92.
It is desirable to set opening area Aa of the through hole 91 to a value close to opening area Ab of the side surface 31a of the casing 10 (if a plurality of air holes 92 exist1, Ab is the total opening area of the holes). Assuming that the gap between adjacent ones of the plate members 93 (i.e., the width of each air hole 92) is la, the number of the air holes 92 is n, and the height of the casing body 21 of FIG. 21 (i.e., the height of the air holes 92) is lb, Ab is set to satisfy the following equation (2):

$$Ab = n \times la \times lb \qquad\qquad (2)$$

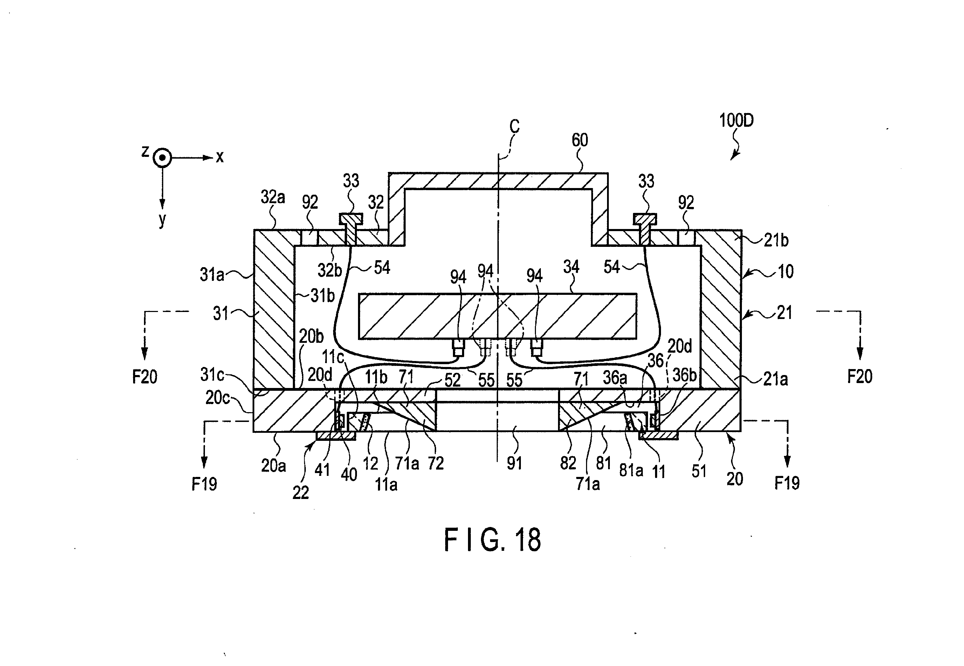

Since the rate of gas inflow through the through hole 91 of opening area Aa is basically equal to the rate of gas outflow through the air holes 92 of total opening area Ab, a greater flow rate can be obtained with a less opening area if opening area Aa of the through hole 91 is set to a value close to total opening area Ab of the air holes 92.
As shown in FIG. 18, the lighting device 100D is provided with the power supply circuit 34, and has connectors 94 to which the first wires 54 are detachably connected. The connectors 94 are exposed to the outside of the lighting device 100D through the through hole 91. This structure enables a user to attach and detach the wires 54 to and from the connectors 94 through the through hole 91. Thus, this structure enhances the convenience of the lighting device 100D. Instead of the connectors 94, connectors 95 may be employed, to which second wires are detachably connected instead of the first wires 54, as is indicated by the two-dot chain lines in FIG. 18.
The lighting device 100D constructed as the above can also enhance thermal dissipation as in the first embodiment. Further, in the fifth embodiment, the heat discharged from the light guide member 11, the shading cover 22, the base 20, and the casing body 21 warms the internal air and ambient air of the lighting device 100D. The warmed air rises by convection along the peripheral surfaces of the device 100 in directions opposite to the gravitational direction, as is indicated by streamlines S in FIG. 21. At this time, air upwardly flows along the inner surface of the casing body 10, as well as along the peripheral surface of the lighting device 100D. Thus, thermal dissipation occurs both from the outer surface and inner surface of the casing body 10, which enhances the thermal dissipation performance of the lighting device 100D. Moreover, since the temperature of the air around the power supply circuit 34 is reduced, the power supply circuit 34 is thermally separated from the light sources 40, and hence elements of low thermal resistance constituting the power supply circuit 34 can be protected.

In addition to the side surface 31a of the casing 10, or instead of the side surface 31a of the casing 10, the air holes 92 may be formed in the ceiling 32 of the casing body 10 (see FIG. 18). The through hole 91 is not limited to be used for attachment and detachment of the wire 54 or 55, but may be used to expose, to the outside of the casing body 10, other components to be operated by the user.

(Sixth embodiment)

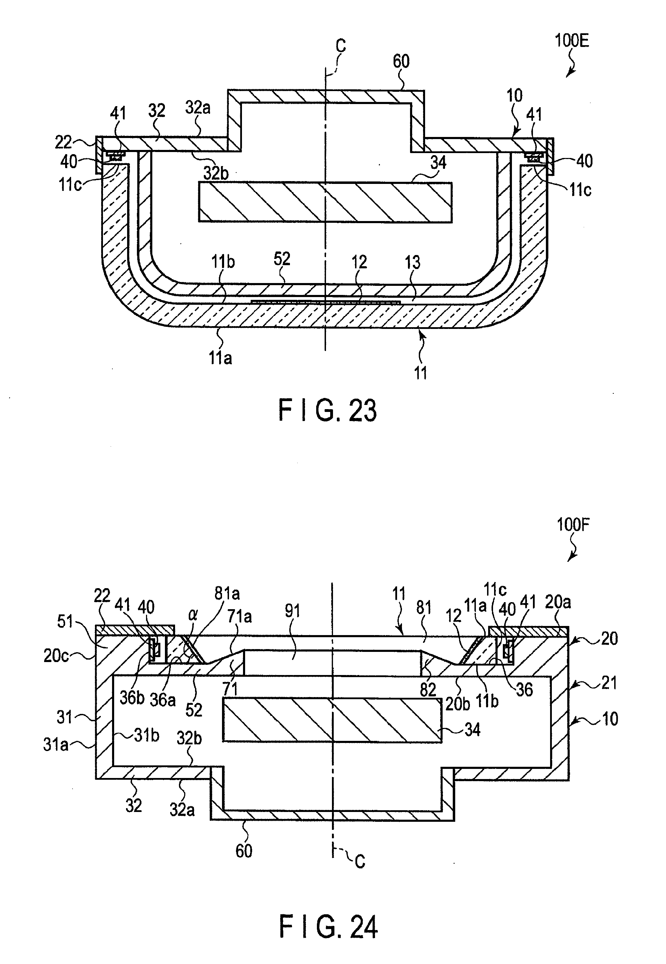

FIGS. 22 and 23 show a lighting device 100E according to a sixth embodiment. The lighting device 100E of the sixth embodiment differs from the lighting device 100 of the first embodiment in, for example, the shape of the light guide member 11, and in that all surfaces other than the ceiling surface radiate light.

More specifically, as shown in FIG. 23, the light guide member 11 is formed like a bowl, and also faces the side surface 31a of the casing 10. That is, the light guide member 11 has a curvature and covers the area other than the ceiling surface and the shading cover 22 of the lighting device 100E.

The side surfaces 11c of the light guide member 11 extend at the upper end of the light guide member 11 substantially perpendicularly with respect to the center axis C. A diffusion portion 12 is provided on the second surface 11b of the light guide member 11. The casing 10 has a thermal dissipation portion 52 that is formed of a metal, extends along the second surface 11b of the light guide member 11, and is curved along the second surface 11b. A reflective layer 13 is provided between the light guide member 11 and the thermal dissipation portion 52. A power supply circuit 34 is housed in the casing 10.

Light sources 40 downwardly face the side surfaces 11c of the light guide member 11. The light sources 40 emit light to the side surfaces 11c of the light guide member 11. The emitted light is guided into the light guide member 11 through the side surfaces 11c. The light emitted from the light sources 40 is transmitted through the light guide member 11 by total internal reflection between the outside (ambient environment) air and the air of the reflective layer 13. Part of the light, which has struck the diffusion portion 12 and become out of the total reflection condition, is emitted to the outside through the first surface 11a. When the light guide member 11 is formed of acryl, if the curvature of the light guide member 11 is $R/r < 1.1$ (R is the curvature radius of the outer surface, and r is the curvature radius of the inner surface), the light transmitting through the light guide member 11 satisfies the total reflection condition even on a curved surface. Therefore, if the curvature radiuses of the inner and outer surfaces are designed to satisfy $R/r < 1.1$, light can be guided to the entire portion of the light guide member 11. That is, in this case, light of highly efficient and wide distribution can be acquired.

The heat generated by the light sources 40 is transmitted to the casing 10, and part of the light is transmitted to the shading cover 22. The thus-transmitted light is emitted to the outside through their surfaces by convection and radiation. Other part of the heat generated by the light sources 40 is transmitted to the mounting portion 60, and is dissipated through a socket (not shown). Yet other part of the heat generated by the light sources 40 is transmitted to the thermal dissipation portion 52 of the casing 10, and then to the light guide member 11 through the reflective layer 13. This heat is further transmitted through the thickness of the light guide member 11, and is emitted from the first surface 11a of the light guide member 11 to the outside by convection and radiation. This structure enables the thermal dissipation performance to be maintained with substantially all surfaces, other than the ceiling surface, kept to radiate.

This structure enables the lighting device 100E to dissipate heat from the casing 10 to the outside via the light guide member 11, thereby enhancing the thermal dissipation of the device 100E, as in the first embodiment. In general, when lateral radiation of the lighting device 100E is realized, its thermal dissipation area is reduced. However, the structure of the sixth embodiment can realize lateral radiation while maintaining or enhancing the thermal dissipation performance.

The diffusion portion 12 may be provided on the first surface 11a of the light guide member 11, instead of the second surface 11b of the same, or may be provided on both the first and second surfaces 11a and 11b. In this case, the light guided to the side and curved surfaces is instantly diffused by them, whereby the lighting device 100E brightly radiates laterally.

(Seventh embodiment)

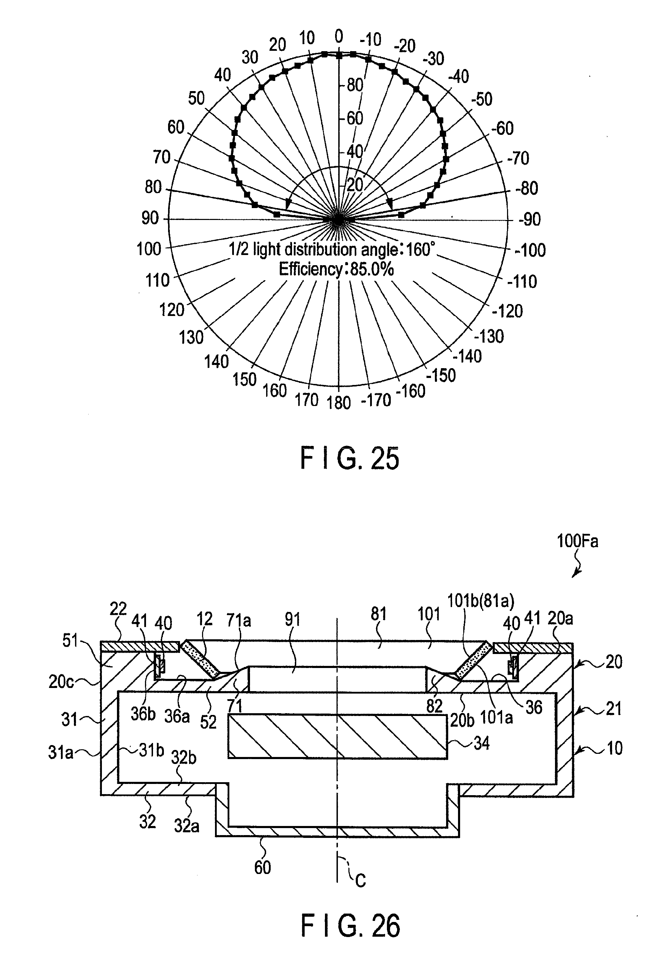

FIG. 24 shows a lighting device 100F according to a seventh embodiment. The lighting device 100F of the seventh embodiment differs from the lighting device 100D of the fifth embodiment in that in the former, the casing body 21, the base 20 and the inclined portion 71, which are included in the casing 10, are formed integral as one body. The lighting device 100F will now be described in comparison with a lighting device 100Fa as shown in FIG. 26, where a diffusion member 101 is employed in place of the light guide member 11.

As shown in FIG. 24, in the seventh embodiment, the inner peripheral surface 81a of the opening 81 of the light guide member 11 has angle $\alpha$ of, for example, 85° in consideration of a balance of light distribution and efficiency. However, inclination angle $\alpha$ of the inner peripheral surface 81a may be set to any angle more than 0°, if it can attain a desired object. The smaller the inclination angle $\alpha$ of the inner peripheral surface 81a, and the smaller the inclination angle $\beta$ of the inclined portion 71, the higher the efficiency. In this case, however, an area where the 1/2 light distribution angle is not more than 160° is also included. In view of this, inclination angle $\alpha$ of the inner peripheral surface 81a and inclination angle $\beta$ of the inclined portion 71, which provide a maximum efficiency, are selected from an area where a desired 1/2 light distribution angle (in this case, 160°) can be obtained. FIG. 25 shows the light distribution angle and efficiency of the lighting device 100F shown in FIG. 24. As shown in FIG. 25, the lighting device 100F provides a 1/2 light distribution angle of 160°, and an efficiency of 85%. Thus, the lighting device 100F exhibits high performance while providing a big space in the casing 10.

FIG. 26 shows a lighting device 100Fa according to a modification of the seventh embodiment. The lighting device 100Fa shown in FIG. 26 employs the aforementioned diffusion member 101 (diffusion plate), in place of the light guide member 11 included in the lighting device 100F shown in FIG. 24. The diffusion member 101 is an example of the aforementioned light-transmitting member. The diffusion member 101 has a shape obtained by, for example, cutting a cone into round slices. The diffusion portion 12 is provided on or in the diffusion member 101. The diffusion member 101 may not be a flat plane, but may have a curved surface. The surfaces located below and above the light sources 40 are, for example, mirror-polished.

The diffusion member 101 faces the light sources 40 along the second surface 20b of the base 20. The diffusion member 101 is formed annularly (in a shape of a frame) like the light guide member 11 shown in FIG. 11. Although the diffusion member 101 is formed, for example, annularly, it may be formed in a polygonal frame. As shown in FIG. 26, the diffusion member 101 has an outer peripheral surface 101a and an inner peripheral surface 101b. The inner peripheral surface 101b defines the opening 81 of the diffusion member 101. The outer and inner peripheral surfaces 101a and 101b of the diffusion member 101 incline with respect to the center axis C.

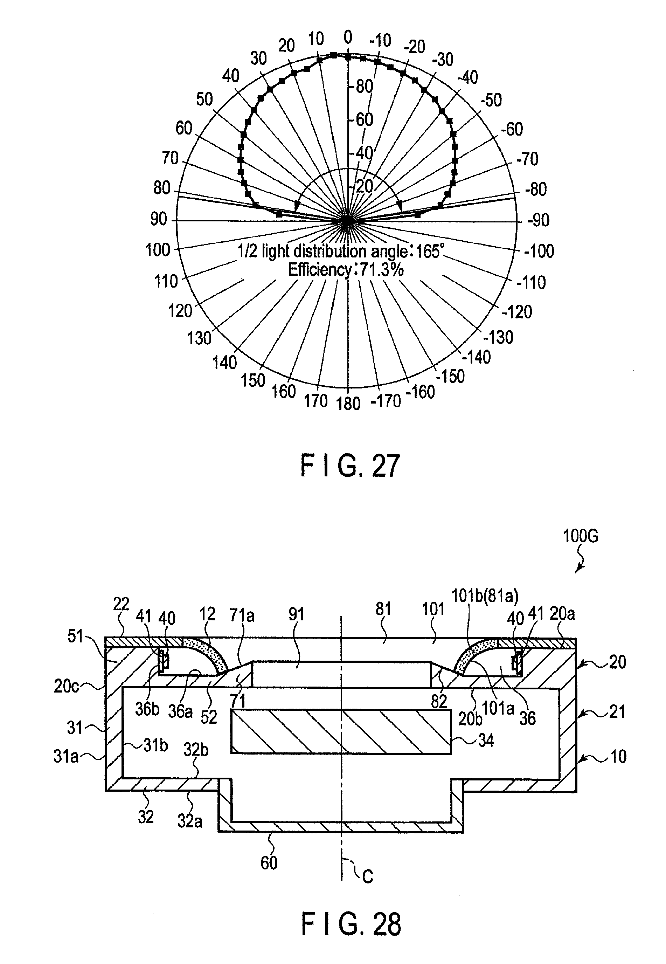

FIG. 27 shows the light distribution angle and efficiency of the lighting device 100Fa shown in FIG. 26. As shown in FIG. 27, the lighting device 100Fa provides a 1/2 light distribution angle of 165°, and an efficiency of 71.3%. Thus, the lighting device 100F exhibits substantially the same light distribution as the lighting device 100F of FIG. 24, although it is slightly degraded in efficiency.

The lighting devices 100B, 100C and 100D according to the third to fifth embodiments may employ the difference member 101 instead of the light guide member 11, as in the above-described modification. Similarly, lighting devices 100G, 100H and 100I according to eighth to tenth embodiments, which employ the diffusion member 101 and will be described below, may also employ the light guide member 11 instead of the diffusion member 101.

(Eighth embodiment)

FIG. 28 shows a lighting device 100G according to an eighth embodiment. The lighting device 100G of the eighth embodiment differs from the lighting device 100Fa according to the modification of the seventh embodiment in that in the former, the outer and inner peripheral surfaces 101a and 101b of the diffusion member 101 are curved. The curved outer and inner peripheral surfaces 101a and 101b of the diffusion member 101 enable a desired light distribution to be easily realized.

The lighting device 100G constructed as the above can exhibit enhanced thermal-dissipation performance, like the device of the first embodiment.

(Ninth embodiment)

FIG. 29 shows a lighting device 100H according to a ninth embodiment. The lighting device 100H of the ninth embodiment employs the diffusion member 101 instead of the light guide member 11. The diffusion member 101 according to the ninth embodiment is, for example, a flat diffusion plate.

As shown in FIG. 29, the diffusion member 101 extends substantially perpendicular to the center axis C. The diffusion member 101 cooperates with the shading cover 22 to cover substantially the entire area of the receiving portion 36 excluding the through hole 91. That is, the diffusion member 101 covers, from below, the gap between the shading cover 22 and the inclined portion 71.

In the ninth embodiment, the inclined portion 71 has a curved reflective surface 71a, and guides light, emitted from the light sources 40, to the diffusion member 101, where it is diffused, thereby illuminating the circumference of the lighting device 100E.

The inclined portion 71 is not limited to a curved one, but may be flat as shown in FIG. 11. Alternatively, the inclined portion 71 may have a plurality of flat or curved surfaces like a facet mirror. If the surface of the inclined portion 71 is curved, it may downwardly or upwardly project. Thus, the curved surface can have a desired shape in accordance with characteristics required for the lighting device. The lighting device 100H constructed as the above can exhibit enhanced thermal-dissipation performance, like the device of the first embodiment.

(Tenth embodiment)

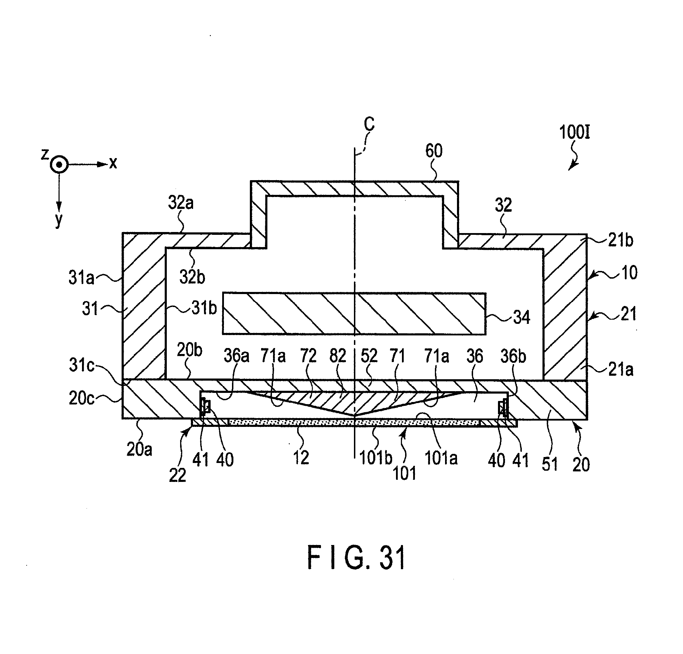

FIGS. 30 and 31 show a lighting device 100I according to a tenth embodiment. The lighting device 100I of the tenth embodiment differs from the lighting device 100H of the ninth embodiment in that in the former, the casing 10, the inclined portion 71 and the diffusion member 101 are formed rectangular. Also in the tenth embodiment, the diffusion member 101 may be replaced with the light guide member 11 that includes the diffusion portion 12. Also in the tenth embodiment, the inclined portion 71 and the through hole 91 of the casing 10 may be employed as in the fourth embodiment. The lighting device 100I constructed as the above can exhibit enhanced thermal-dissipation performance, like the device of the first embodiment.

The lighting devices according to the first to tenth embodiments, described above, may be modified in various ways. For instance, it is not necessary to form the entire casing 10 of a metal. For instance, only the portion used to transmit the heat of the light sources 40 to the thermal dissipation portion 52 may be formed of a metal. Further, in each embodiment, the diffusion member 101 may be replaced with a transparent member. That is, the light-transmitting member employed in the light-emitting portion in each of lighting devices 100F to 100I may be formed of a transparent member having substantially the same shape as each of the diffusion members 101 or having a shape different from them. Furthermore, the diffusion member 101 may not be employed.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A lighting device (100; 100A) **characterized by** comprising:

   a light guide member (11) including a first surface (11a) facing an outside of the lighting device (100; 100A), a second surface (11b) opposite to the first surface (11a), and at least one side surface (11c) extending from an end of the first surface (11a) to an end of the second surface (11b), the light guide member (11) also including a diffusion portion (12);
   at least one light source (40) facing the at least one side surface (11c) of the light guide member (11);
   a substrate (41) on which the light source (40) is mounted; and
   a casing (10) including a thermal dissipation portion (51; 52) which is formed of a metal and extends along the second surface (11b) of the light guide member (11), the casing (10) supporting the substrate (41) and being thermally connected to the light source (40).

2. The lighting device (100; 100A) of claim 1, **characterized in that**
   the light guide member (11) is formed to be polygonal; and
   the at least one light source (40) includes a plurality of light sources (40), and the at least one side surface (11c) of the light guide member (11) includes a plurality of side surfaces (11c), the plurality of light sources (40) being arranged along the plurality of side surfaces (11c).

3. The lighting device (100; 100A) of claim 2, **characterized in that** the diffusion portion (12) is formed to be circular on a central portion of the polygonal light guide member (11).

4. The lighting device (100B) of claim 1, **characterized in that** the thermal dissipation portion (52) includes an inclined portion (71) extending along the second surface (11b) of the light guide member (11) and gradually outward thickened toward a central portion of the light guide member (11).

5. The lighting device (100B) of claim 4, **characterized in that** the inclined portion (71) includes a reflective surface (71a) permitted to reflect light received from the light source (40) to the outside of the lighting device (100B).

6. The lighting device (100B) of claim 4, **characterized in that** the light guide member (11) includes a portion gradually thinned toward the central portion of the light guide member (11), the portion gradually thinned being formed by inclining the second surface (11b) toward the first surface (11a) along an outline of the inclined portion (71).

7. The lighting device (100C) of claim 4, **characterized in that**
the light guide member (11) includes an opening (81) formed therethrough from the second surface (11b) to the first surface (11a); and
the inclined portion (71) is inserted in the opening (81) of the light guide member (11), and exposed to the outside of the lighting device (100C) through the opening (81).

8. The lighting device (100C) of claim 7, **characterized in that** the diffusion portion (12) is provided on an inner peripheral surface (81a) of the opening (81) of the light guide member (11), and the inner peripheral surface (81a) gradually inclines such that an inner diameter of the diffusion portion (12) gradually increases from the second surface (11b) to the first surface (11a).

9. The lighting device (100D; 100F) of claim 1, **characterized in that**
the light guide member (11) includes an opening (81) formed therethrough from the second surface (11b) to the first surface (11a); and
the casing (10) includes a through hole (91) formed therein and opening in the opening (81) of the light guide member (11) to cause an interior of the casing (10) to communicate with the outside of the lighting device (100D; 100F).

10. The lighting device (100D) of claim 9, **characterized in that** a side surface (31a) of the casing (10) includes an air hole (92) formed therein to discharge, to an outside of the casing (10), air flowing from the outside of the lighting device (100D) into the casing (10) via the through hole (91).

11. The lighting device (100D) of claim 9, **characterized by** further comprising:

a power supply circuit (34) housed in the casing (10); and
a connector (94) included in the power supply circuit (34) and connected to a detachable wire (54; 55),
wherein the connector (94) is permitted to be exposed to the outside of the lighting device (100D) via the through hole (91).

12. The lighting device (100E) of claim 1, **characterized in that** the light guide member (11) is formed like a bowl and also faces the side surface (31a) of the casing (10).

13. A lighting device (100B; 100Fa; 100G; 100H) **characterized by** comprising:

at least one light source (40);
a substrate (41) provided with the light source (40) :

a light-transmitting member (11; 101) including a first surface (11a) facing an outside of the lighting device (100B; 100Fa; 100G; 100H), a second surface (11b) opposite to the first surface (11a), and an opening (81) formed therethrough from the second surface (11b) to the first surface (11a), and configured to transmit light received from the at least one light source (40), the light-transmitting member (11; 101) being provided with a diffusion portion (12); and
a casing (10) supporting the substrate (41) and including a through hole (91) which communicates with the opening (81) of the light-transmitting member (11, 101) and causes an interior of the casing (10) to communicate with an outside of the lighting device (100B; 100Fa; 100G; 100H).

14. The lighting device (100D) of claim 13, **characterized in that** an air hole (92) enabling air flowing from the outside of the lighting device (100D) into the casing (10) via the through hole (91) to flow to the outside of the lighting device (100D) is formed in a side surface (31a) of the casing (10).

15. The lighting device (100D) of claim 13, **characterized by** further comprising:

a power supply circuit (34) housed in the casing (10); and

a connector (94) included in the power supply circuit (34) and connected to a detachable wire (54; 55), wherein the connector (94) is permitted to be exposed to the outside of the lighting device (100D) via the through hole (91).

16. A lighting device (100B) **characterized by** comprising:

at least one light source (40);
a substrate (41) provided with the light source (40) ;
a light-transmitting member (11; 101) including a first surface (11a) facing an outside of the lighting device (100B), a second surface (11b) opposite to the first surface (11a), and configured to transmit light received from the at least one light source (40), the light-transmitting member (11; 101) being provided with a diffusion portion (12);
a casing (10) supporting the substrate (41); and
an inclined portion (71) provided in the casing (10) and permitted to reflect light received from the at least one light source (40) to the outside of the lighting device (100B), the inclined portion (71) being gradually outward thickened toward a center of the casing (10) along the second surface (11b) of the light-transmitting member (11; 101).

17. The lighting device (100C) of claim 16, **characterized in that**
the light-transmitting member (11; 101) includes an opening (81) formed therethrough from the second surface (11b) to the first surface (11a); and
the diffusion portion (12) is provided on an inner peripheral surface (81a) of the opening (81) of the light-transmitting member (11; 101), the inner peripheral surface (81a) inclining such that an inner diameter of the inner peripheral surface (81a) gradually increases from the second surface (11b) to the first surface (11a).

18. The lighting device (100C) of claim 17, **characterized in that** the inner peripheral surface (81a) inclines within a range of from not less than 70° to less than 90° with respect to the second surface (11b).

F I G. 1

F I G. 2

FIG. 3

FIG.4

FIG.5

F I G. 6

F I G. 7

FIG.8

EP 3 026 324 A2

F I G. 9

F I G. 10

FIG. 11

EP 3 026 324 A2

FIG. 12

FIG. 13

F I G. 14

F I G. 15

F I G. 16

F I G. 17

F I G. 18

F I G. 19

F I G. 20

FIG. 21

FIG. 22

F I G. 23

F I G. 24

F I G. 25

1/2 light distribution angle:160°
Efficiency:85.0%

F I G. 26

1/2 light distribution angle：165°
Efficiency：71.3%

F I G. 27

100G

F I G. 28

F I G. 29

F I G. 30

FIG. 31

F I G. 32

37